# EUROPEAN PATENT APPLICATION

(11) **EP 3 531 545 A1**
(43) Date of publication of application: **28.08.2019**
(21) Application number: 16921595.1
(22) Date of filing: 18.11.2016
(51) Int. Cl.: H02M 3/157, G06F 1/32

(54) **VOLTAGE ADJUSTMENT CIRCUIT AND VOLTAGE ADJUSTMENT METHOD**

(71) Applicant: Huawei Technologies Co., Ltd., Longgang District Shenzhen, Guangdong 518129 (CN)
(72) Inventor: TANG, Yangyang, Shenzhen Guangdong 518129 (CN); ZHANG, Jian, Shenzhen Guangdong 518129 (CN); LIU, Hu, Shenzhen Guangdong 518129 (CN); YAO, Cong, Shenzhen Guangdong 518129 (CN); WANG, Xinru, Shenzhen Guangdong 518129 (CN); ZHANG, Chenxiong, Shenzhen Guangdong 518129 (CN)
(74) Representative: Maiwald Patent- und Rechtsanwaltsgesellschaft mbH
(86) International application number: PCT/CN2016/106381
(87) International publication number: WO 2018/090320

(57) **Abstract**

This application relates to the field of integrated circuits, and provides a voltage regulation circuit and a voltage regulation method. The voltage regulation circuit includes at least one switch module (1), at least one obtaining module (2), at least one control module (3), and at least one load (4), and the at least one switch module (1), the at least one obtaining module (2), the at least one control module (3), and the at least one load (4) are in a one-to-one correspondence. Each of the at least one obtaining module (2) may obtain load information of a corresponding load (4), and output the load information to a corresponding control module (3), and the corresponding control module (3) may generate a switch control signal based on the load information. Because the switch control signal generated by the corresponding control module (3) is an accurate signal, after the switch control signal is output to a corresponding switch module (1), the corresponding switch module (1) may regulate, based on the accurate switch control signal, a voltage input to the corresponding load (4), so as to improve voltage regulation accuracy and reliability.

## Description

### TECHNICAL FIELD

The present invention relates to the field of integrated circuits, and in particular, to a voltage regulation circuit and a voltage regulation method.

### BACKGROUND

With development of semiconductor technologies, an integrated circuit is applied in an increasingly wide range. The integrated circuit has diversified functions, and different logic is used to implement the functions of the integrated circuit, in other words, a working status when the integrated circuit works is changing, and a resistance or a current of a load in the integrated circuit changes with the working status. Consequently, a voltage of the integrated circuit fluctuates, and the integrated circuit may be faulty in a working process. Therefore, to reduce impact of the voltage fluctuation occurring when the working status of the integrated circuit changes, a voltage input to the load in the integrated circuit needs to be regulated by using a voltage regulation circuit.

Currently, the integrated circuit usually needs to be used together with a power supply. When the power supply is powered on, the power supply may provide a supply voltage for the integrated circuit, so that the integrated circuit works. When the voltage input to the load in the integrated circuit is regulated, a linear regulator may be connected in series between the supply voltage provided by the power supply and the load. When the integrated circuit receives the input supply voltage, the linear regulator may divide the supply voltage, so that a relatively low voltage is input to the load in the integrated circuit, thereby implementing voltage regulation.

A working status of the load in the integrated circuit is changing, a degree of voltage fluctuation occurring each time the working status changes is different, and for a same integrated circuit, fixed supply voltages are provided for a load of a linear regulator disposed in the integrated circuit and a load in the integrated circuit. Consequently, when voltage regulation is performed by using the linear regulator, regulation on the voltage input to the load may be not accurate enough, and voltage regulation reliability and accuracy may be reduced.

### SUMMARY

To improve voltage regulation reliability and accuracy, embodiments of the present invention provide a voltage regulation circuit and a voltage regulation method. The technical solutions are as follows:
According to a first aspect, a voltage regulation circuit is provided. The voltage regulation circuit includes at least one switch module, at least one obtaining module, at least one control module, and at least one load, and the at least one switch module, the at least one obtaining module, the at least one control module, and the at least one load are in a one-to-one correspondence.

Each of the at least one obtaining module obtains load information, and sends the load information to a corresponding control module. The load information includes a voltage input to a corresponding load, an event identifier used to identify whether a voltage drop occurs in the load, and a rated current value and a rated voltage value required by the load in a current working status, or the load information includes a quantity of executed instructions and a quantity of performed prediction operations.

Each of the at least one control module generates a switch control signal based on load information output by a corresponding obtaining module, and outputs the switch control signal to a corresponding switch module.

Each of the at least one switch module regulates, based on a switch control signal output by a corresponding control module, a voltage input to the corresponding load.

The at least one switch module, the at least one obtaining module, the at least one control module, and the at least one load are in a one-to-one correspondence. Therefore, an example in which there is one switch module, one obtaining module, one control module, and one load is used for description. A first input end of the switch module is connected to a power supply, an output end of the switch module is separately connected to an input end of the obtaining module and a first end of the load, and a second input of the switch module is connected to an output end of the control module. An output end of the obtaining module is connected to an input end of the control module, and a second end of the load is connected to a protection ground.

The load information may be information that includes the voltage input to the corresponding load, the event identifier used to identify whether a voltage drop occurs in the load, and the rated current value and the rated voltage value required by the load in the current working status, or may be information that includes the quantity of executed instructions and the quantity of performed prediction operations. Therefore, an implementation circuit of the obtaining module varies with load information.

In a possible implementation, when the load information may be the information that includes the voltage input to the corresponding load, the event identifier used to identify whether a voltage drop occurs in the load, and the rated current value and the rated voltage value required by the load in the current working status, each of the at least one obtaining module includes a performance monitor.

The performance monitor obtains the voltage input to the corresponding load, the event identifier used to identify whether a voltage drop occurs in the load, and the rated current value and the rated voltage value required by the load in the current working status, and outputs the voltage input to the corresponding load, the event identifier, the rated current value, and the rated voltage value to the corresponding control module.

An input end of the performance monitor is connected to the output end of the switch module, and a first output end of the performance monitor, a second output end of the performance monitor, a third output end of the performance monitor, and a fourth output end of the performance monitor are separately connected to the input end of the control module.

When the load information is the information that includes the quantity of executed instructions and the quantity of performed prediction operations, each of the at least one obtaining module includes a voltage sensor.

The voltage sensor obtains the voltage input to the corresponding load and the event identifier used to identify whether a voltage drop (or referred to as a voltage sag, for example, a voltage sag caused by an IR drop) occurs in the load, and sends the voltage input to the corresponding load and the event identifier to the control module corresponding to the obtaining module.

An input end of the voltage sensor is connected to the output end of the switch module, and a first output end of the voltage sensor and a second output end of the voltage sensor are separately connected to the input end of the control module.

In another possible implementation, when the load information is the information that includes the quantity of executed instructions and the quantity of performed prediction operations, the obtaining module may further include a memory, a counter, and a controller, and may obtain the quantity of executed instructions and the quantity of performed prediction operations by using the memory, the counter, and the controller.

A manner in which the voltage regulation circuit generates the switch control signal by using the control module varies with load information. For details, refer to the following two cases.

In a first case, each of the at least one control module includes a first comparison unit, a first decision unit, and a first storage unit.

When the load information includes the voltage input to the corresponding load, the event identifier, the rated current value, and the rated voltage value, and the event identifier is an identifier used to indicate that voltage fluctuation occurs in the load, the first comparison unit compares the voltage input to the corresponding load with a preset voltage threshold to generate a first quantity of switches configured to conduct the corresponding switch module, and outputs the first quantity of switches to the first decision unit;
the first storage unit determines, based on the rated current value and the rated voltage value, a second quantity of switches configured to conduct the corresponding switch module in the current working status, and outputs the second quantity of switches to the first decision unit;
the first decision unit generates a first control signal based on the first quantity of switches and the second quantity of switches, and outputs the first control signal to the switch module corresponding to the control module, to regulate the voltage fluctuation of the load by using the switch module;
the first decision unit outputs a first control identifier to the first comparison unit, to instruct the first comparison unit to stop comparing the voltage input to the corresponding load with the preset voltage threshold, where the first control identifier is used to identify that the voltage fluctuation of the load is currently regulated by using the switch module; and
the first decision unit generates a second control signal after first specified duration based on the second quantity of switches, and outputs the second control signal to the corresponding switch module, to restore a working status of the load to the current working status by using the switch module.

In addition, the first decision unit may output a second control identifier to the first comparison unit after second specified duration, to instruct the first comparison unit to compare the voltage input to the corresponding load with the preset voltage threshold again. The second control identifier is used to identify that regulation performed, by using the switch module, on the voltage input to load has been stopped.

Further, the first decision unit may further output a third control identifier to the first comparison unit, to instruct the first comparison unit to continue to stop comparing the voltage input to the corresponding load with the preset voltage threshold. The third control identifier is used to identify that the working status of the load has been restored to the current working status by using the switch module.

In another possible implementation, that the first comparison unit compares the voltage input to the corresponding load with a preset voltage threshold to generate a first quantity of switches configured to conduct the corresponding switch module, and outputs the first quantity of switches to the first decision unit includes:
The first comparison unit may receive the voltage input to the corresponding load and the event identifier that are sent by the obtaining module. When the event identifier is an identifier used to indicate that voltage fluctuation occurs in the load, the first comparison unit may compare the voltage input to the corresponding load with the preset voltage threshold, determine a voltage fluctuation difference between the voltage input to the corresponding load and the preset voltage threshold, obtain, from a stored correspondence between a voltage fluctuation difference and a quantity of switches based on the voltage fluctuation difference, a quantity of switches that is corresponding to the voltage fluctuation difference, determine the obtained quantity of switches as the first quantity of switches, and output the first quantity of switches to the first decision unit.

In another possible implementation, the first comparison unit may determine a voltage fluctuation difference based on the voltage input to the corresponding load and the preset voltage threshold, obtain, from a stored correspondence between a voltage fluctuation difference and a breakover voltage based on the voltage fluctuation difference, a breakover voltage corresponding to the voltage fluctuation difference, and determine the obtained breakover voltage as a first breakover voltage.

In another possible implementation, that the first storage unit determines, based on the rated current value and the rated voltage value, a second quantity of switches configured to conduct the corresponding switch module in the current working status, and outputs the second quantity of switches to the first decision unit includes:
obtaining, from a stored correspondence between a quantity of switches and a rated current value as well as a rated voltage value based on the rated current value and the rated voltage value, a quantity of switches that is corresponding to the rated current value and the rated voltage value, and determining the obtained quantity of switches as the second quantity of switches.

In another possible implementation, in addition to pre-storing the correspondence between a quantity of switches and a rated current value as well as a rated voltage value, the first storage unit may further store a correspondence between a breakover voltage and a rated current value as well as a rated voltage value. When receiving the rated current value and the rated voltage value that are sent by the obtaining module, the first storage unit may obtain, from the correspondence between a breakover voltage value and a rated current value as well as a rated voltage value based on the rated current value and the rated voltage value, a breakover voltage corresponding to the rated current value and the rated voltage value, and determine the obtained breakover voltage as a second breakover voltage.

In another possible implementation, the generating a first control signal based on the first quantity of switches and the second quantity of switches, and outputting the first control signal to the switch module corresponding to the control module, to regulate the voltage fluctuation of the load by using the switch module includes:
The first decision unit may receive the first quantity of switches that is output by the first comparison unit and the second quantity of switches that is output by the first storage unit, subtract the second quantity of switches from the first quantity of switches to obtain a switch quantity difference, convert the switch quantity difference into a form of a digital signal, determine the switch quantity difference converted into the form of the digital signal to serve as the first control signal, and output the first control signal to the switch module, to regulate the voltage fluctuation of the load by using the switch module.

In addition, the first comparison unit may further output the first breakover voltage, and the first storage unit may output the second breakover voltage. Therefore, the first decision unit may further subtract the second breakover voltage from the first breakover voltage to obtain a breakover voltage difference, convert the breakover voltage difference into a form of a digital signal, and determine the breakover voltage difference in the form of the digital signal as the first control signal.

In another possible implementation, when voltage fluctuation occurs in the load, a time for the voltage fluctuation is limited. Therefore, to help the voltage regulation circuit to restore the voltage input to the load to a voltage required by the current working status after regulating the voltage fluctuation of the load, the control module further includes a first counting unit.

The first counting unit performs first counting based on the first control identifier, and outputs a first end identifier to the first decision unit after the first counting ends, to indicate, to the first decision unit, that the first specified duration expires. The first control identifier is obtained when the first decision unit simultaneously outputs the first control identifier to the first comparison unit and the first counting unit.

Further, the first counting unit may further perform second counting after sending the first end identifier to the first decision unit, or may further perform second counting based on the third control identifier, and output a second end identifier to the first decision unit after the second counting ends, to indicate, to the first decision unit, that the second specified duration expires. The third control identifier is obtained when the first decision unit simultaneously outputs the second control signal to the switch module and the first counting unit.

A first input end of the first comparison unit, a second input end of the first comparison unit, a third input end of the first comparison unit, a fourth input end of the first comparison unit, a first input end of the first storage unit, and a second input end of the first storage unit are separately connected to the output end of the obtaining module. An output end of the first comparison unit is connected to a first input end of the first decision unit, and a fifth input end of the first comparison unit and a first input end of the first counting unit are separately connected to a first output end of the first decision unit. An output end of the first storage unit is connected to a second input end of the first decision unit, and a second output end of the first decision unit is connected to the second input end of the switch module. A third input end of the first decision unit is connected to an output end of the first counting unit.

In a second case, when the load information includes the quantity of executed instructions and the quantity of performed prediction operations, each of the at least one control module includes a second comparison unit, a second decision unit, a second counting unit, and a second storage unit.

When the load information includes the quantity of executed instructions and the quantity of performed prediction operations, the second comparison unit compares the quantity of executed instructions with a first quantity threshold to generate a first comparison value, compares the quantity of performed prediction operations with a second quantity threshold to generate a second comparison value, and outputs the first comparison value and the second comparison value to the second counting unit, where the first quantity threshold and the second quantity threshold are sent by the second storage unit to the second comparison unit in a current counting period;
the second counting unit combines the first comparison value with the second comparison value to obtain a combination value, when the combination value is different from the third quantity threshold, assigns the combination value to the third quantity threshold, determines whether the current counting period ends, when the current counting period ends, determines a fourth control identifier based on the third quantity threshold determined when the current counting period ends, and outputs the fourth control identifier to the second decision unit, where the fourth control identifier is used to identify whether the quantity of executed instructions and the quantity of performed prediction operations are normal; and
the second decision unit generates a third control signal and an update signal based on the fourth control identifier, and outputs the third control signal to the corresponding switch module, to regulate voltage fluctuation of the load by using the switch module.

A first input end of the second comparison unit and a second input end of the second comparison unit are separately connected to the output end of the obtaining module, a third input end of the second comparison unit is connected to a first output end of the second storage unit, a fourth input end of the second comparison unit is connected to a second output end of the second storage unit, a first output end of the second comparison unit is connected to a first input end of the second counting unit, and a second output end of the second comparison unit is connected to a second input end of the second counting unit. An output end of the second counting unit is connected to an input end of the second decision unit. A first output end of the second decision unit is connected to the second input end of the switch module, and a second output end of the second decision unit is connected to an input end of the second storage unit.

It should be noted that the first comparison value is used to indicate whether the first quantity threshold is the same as the quantity of executed instructions; when the first quantity threshold is the same as the quantity of executed instructions, the first comparison value is a first value; when the first quantity threshold is different from the quantity of executed instructions, the first comparison value is a second value.

Likewise, the second comparison value is used to indicate whether the second quantity threshold is the same as the quantity of performed prediction operations; when the second quantity threshold is the same as the quantity of performed prediction operations, the second comparison value is a first value; when the second quantity threshold is different from the quantity of performed prediction operations, the first comparison value is a second value.

In another possible implementation, when the current counting period does not end, the combination value is repeatedly compared with the third quantity threshold until the current counting period ends.

In another possible implementation, an operation that the second comparison unit determines whether the current counting period ends may be as follows: Each time the second counting unit increases a count value by 1, the second comparison unit compares a current count value obtained after 1 is increased with a preset counting period, and when the current count value obtained after 1 is increased is equal to the preset counting period, determines that the current counting period ends, or when the current count value obtained after 1 is increased is not equal to the preset counting period, determines that the current counting period does not end.

In another possible implementation, that the second decision unit generates a third control signal and an update signal based on the fourth control identifier includes:
The second decision unit may receive the fourth control identifier output by the second counting unit, obtain, from a stored correspondence between a control identifier, a control signal, and an update signal based on the fourth control identifier, a control signal and an update signal that are corresponding to the fourth control identifier, and determine the obtained control signal as the third control signal.

In another possible implementation, the second decision unit outputs the update signal to the second storage unit, to update the first quantity threshold and the second quantity threshold that are stored in the second storage unit.

In this embodiment of the present invention, each of the at least one switch module includes at least one transistor and at least one drive, and the at least one transistor and the at least one drive are in a one-to-one correspondence.

Each of the at least one drive drives a corresponding transistor, and each of the at least one transistor is conducted or disconnected based on the control signal as driven by a corresponding drive, to regulate the voltage input to the corresponding load.

For each of the at least one drive and each of the at least one transistor, an input end of the drive is connected to the output end of the control module, an output end of the drive is connected to a gate of the transistor, a source of the transistor is connected to the power supply, and a drain of the transistor is connected to the load corresponding to the switch module.

In another possible implementation, that each of the at least one transistor is conducted or disconnected based on the control signal as driven by a corresponding drive, to regulate the voltage input to the corresponding load includes:
If the switch control signal is a first voltage signal, the transistor is disconnected, or if the switch control signal is a second voltage signal, the transistor may be conducted, to change a resistance value of an equivalent resistor of the at least one transistor, and regulate the voltage input to the load.

In addition, the switch module may include only the transistor and include no drive, and directly controls conduction or disconnection of the at least one transistor by using the switch control signal.

According to a second aspect, a voltage regulation method is provided, and is applied to the voltage regulation circuit according to the first aspect to the sixth possible implementation of the first aspect, where the method includes:
obtaining load information of a corresponding load by using each of the at least one obtaining module and sending the load information to a corresponding control module when a supply voltage is applied, where the load information includes a voltage input to the corresponding load, an event identifier used to identify whether a voltage drop occurs in the load, and a rated current value and a rated voltage value required by the load in a current working status, or the load information includes a quantity of executed instructions and a quantity of performed prediction operations;
generating a switch control signal by using each of the at least one control module based on load information output by a corresponding obtaining module, and outputting the switch control signal to a corresponding switch module; and
regulating, by using each of the at least one switch module based on a switch control signal output by a corresponding control module, a voltage input to the corresponding load.

Optionally, each of the at least one obtaining module includes a performance monitor; and
the obtaining load information of a corresponding load by using each of the at least one obtaining module and sending the load information to a corresponding control module when the supply voltage is applied includes:
obtaining the voltage input to the corresponding load, the event identifier, the rated voltage value, and the rated current value by using the performance monitor, and outputting the voltage input to the corresponding load, the event identifier, the rated voltage value, and the rated current value to the corresponding control module.

Optionally, each of the at least one obtaining module includes a voltage sensor; and
the obtaining load information of a corresponding load by using each of the at least one obtaining module and sending the load information to a corresponding control module when the supply voltage is applied includes:
obtaining, by using the voltage sensor, the voltage input to the corresponding load and the event identifier used to identify whether a voltage drop occurs in the load, and sending the voltage input to the corresponding load and the event identifier to the control module corresponding to the obtaining module.

Optionally, each of the at least one control module includes a first comparison unit, a first decision unit, and a first storage unit; and
the generating a switch control signal by using each of the at least one control module based on load information output by a corresponding obtaining module, and outputting the switch control signal to a corresponding switch module includes:
when the load information includes the voltage input to the corresponding load, the event identifier, the rated current value, and the rated voltage value, and the event identifier is an identifier used to indicate that voltage fluctuation occurs in the load, comparing the voltage input to the corresponding load with a preset voltage threshold by using the first comparison unit to generate a first quantity of switches configured to conduct the corresponding switch module, and outputting the first quantity of switches to the first decision unit;
determining, by using the first storage unit based on the rated current value and the rated voltage value, a second quantity of switches configured to conduct the corresponding switch module in the current working status, and outputting the second quantity of switches to the first decision unit;
generating a first control signal by using the first decision unit based on the first quantity of switches and the second quantity of switches, and outputting the first control signal to the switch module corresponding to the control module, to regulate the voltage fluctuation of the load by using the switch module;
outputting a first control identifier to the first comparison unit by using the first decision unit, to instruct the first comparison unit to stop comparing the voltage input to the corresponding load with the preset voltage threshold, where the first control identifier is used to identify that the voltage fluctuation of the load is currently regulated by using the switch module; and
generating a second control signal after first specified duration by using the first decision unit based on the second quantity of switches, and outputting the second control signal to the corresponding switch module, to restore a working status of the load to the current working status by using the switch module.

Optionally, the decision unit outputs a second control identifier to the first comparison unit after second specified duration, to instruct the first comparison unit to compare the voltage input to the corresponding load with the preset voltage threshold again. The second control identifier is used to identify that regulation of the voltage input to load has been stopped and the voltage input to the load needs to be regulated again by using the switch module.

Optionally, the control module further includes a first counting unit; and
before the generating a second control signal after first specified duration by using the first decision unit based on the second quantity of switches, and outputting the second control signal to the corresponding switch module, the method further includes:
receiving the first control identifier by using the first counting unit, where the first control identifier is obtained when the first decision unit simultaneously outputs the first control identifier to the first comparison unit and the first counting unit; and
performing counting by using the first counting unit based on the first control identifier, and outputting a first end identifier to the first decision unit after the counting ends, to indicate that the first specified duration expires.

Optionally, after the performing counting by using the first counting unit based on the first control identifier, and outputting a first end identifier to the first decision unit after the counting ends, the method further includes:
receiving, by using the first counting unit, a third control identifier output by the second decision unit, where the second control identifier is obtained when the first decision unit simultaneously outputs the second control signal to the switch module and the first counting unit; and
performing second counting by using the first counting unit based on the third control identifier, and outputting a second end identifier to the first decision unit after the second counting ends, to indicate, to the first decision unit, that the second specified duration expires.

Optionally, each of the at least one control module includes a second comparison unit, a second decision unit, a second counting unit, and a second storage unit; and
the generating a switch control signal by using each of the at least one control module based on load information output by a corresponding obtaining module, and outputting the switch control signal to a corresponding switch module includes:
when the load information includes the quantity of executed instructions and the quantity of performed prediction operations, comparing the quantity of executed instructions with a first quantity threshold by using the second comparison unit to generate a first comparison value, comparing the quantity of performed prediction operations with a second quantity threshold by using the second comparison unit to generate a second comparison value, and outputting the first comparison value and the second comparison value to the second counting unit, where the first quantity threshold and the second quantity threshold are sent by the second storage unit to the second comparison unit in a current counting period;
combining the first comparison value with the second comparison value by using the second counting unit to obtain a combination value, when the combination value is different from the third quantity threshold, assigning the combination value to the third quantity threshold, determining whether the current counting period ends, when the current counting period ends, determining a fourth control identifier based on the third quantity threshold determined when the current counting period ends, and outputting the fourth control identifier to the second decision unit, where the fourth control identifier is used to identify whether the quantity of executed instructions and the quantity of performed prediction operations are normal; and
generating a third control signal and an update signal by using the second decision unit based on the fourth control identifier, and outputting the third control signal to the corresponding switch module, to regulate voltage fluctuation of the load by using the switch module.

Optionally, the update signal is output to the second storage unit by using the second decision unit, to update the first quantity threshold and the second quantity threshold that are stored in the second storage unit.

Optionally, each of the at least one switch module includes at least one transistor and at least one drive, and the at least one transistor and the at least one drive are in a one-to-one correspondence; and
the regulating, by using the corresponding control module based on the switch control signal, a voltage input to a corresponding load includes:
driving a corresponding transistor by using each of the at least one drive; and
controlling, based on the switch control signal, the corresponding transistor to be conducted or disconnected as driven by the corresponding drive, to regulate the voltage input to the corresponding load.

Optionally, the controlling, based on the switch control signal, the corresponding transistor to be conducted or disconnected includes:
when the switch control signal is a first voltage signal, disconnecting the transistor; or
when the switch control signal is a second voltage signal, conducting the transistor.

According to a third aspect, an embodiment of the present invention provides an integrated circuit. The integrated circuit includes a processor and a memory. The memory is configured to store data and/or a program instruction that need to be stored in an integrated circuit in the voltage regulation method according to the foregoing aspects. The processor is configured to perform corresponding functions of the voltage regulation circuit according to the foregoing aspects. The integrated circuit may further include a communications bus, and the communications bus is configured to establish a connection between the processor and the memory. In a possible design, the integrated circuit may further include a communications unit, configured to support the integrated circuit in implementing communication with external devices according to the foregoing aspects. Optionally, the integrated circuit may further include a receiver and/or a transmitter, configured to support the integrated circuit in implementing data and/or instruction receiving and/or sending according to the foregoing aspects.

According to a fourth aspect, an embodiment of the present invention provides a computer storage medium, configured to store a computer software instruction used by the foregoing voltage regulation circuit. The computer software instruction includes a program designed for executing the foregoing aspects.

Beneficial effects of the technical solutions provided in the embodiments of the present invention are as follows: The load information may include the voltage input to the corresponding load, the event identifier used to identify whether a voltage drop occurs in the load, and the rated current value and the rated voltage value required by the load in the current working status, or the load information includes the quantity of executed instructions and the quantity of performed prediction operations. Therefore, when the load information includes the voltage input to the corresponding load, the event identifier, the rated current value, and the rated voltage value, the control module may generate the switch control signal based on the voltage input to the corresponding load, the event identifier, the rated current value, and the rated voltage value. When the load information includes the quantity of executed instructions and the quantity of performed prediction operations, the control module may generate the switch control signal based on the quantity of executed instructions and the quantity of performed prediction operations. The switch module may regulate, based on the switch control signal, the voltage input to the corresponding load. In other words, the switch control signal is generated by using related information of the corresponding load, and the related information of the load is information for accurately describing the load. Therefore, the switch control signal generated by the control module is an accurate signal, and the switch module regulates, based on the accurate switch control signal, the voltage input to the corresponding load, so as to improve voltage regulation accuracy and reliability.

### BRIEF DESCRIPTION OF DRAWINGS

FIG. 1A is a schematic structural diagram of a first voltage regulation circuit according to an embodiment of the present invention;
FIG. 1B is a schematic structural diagram of a second voltage regulation circuit according to an embodiment of the present invention;
FIG. 2 is a schematic structural diagram of a third voltage regulation circuit according to an embodiment of the present invention;
FIG. 3 is a schematic structural diagram of a fourth voltage regulation circuit according to an embodiment of the present invention;
FIG. 4 is a schematic structural diagram of a fifth voltage regulation circuit according to an embodiment of the present invention;
FIG. 5 is a schematic structural diagram of a sixth voltage regulation circuit according to an embodiment of the present invention;
FIG. 6 is a schematic structural diagram of a seventh voltage regulation circuit according to an embodiment of the present invention;
FIG. 7 is a schematic structural diagram of an eighth voltage regulation circuit according to an embodiment of the present invention; and
FIG. 8 is a flowchart of a voltage regulation method according to an embodiment of the present invention.

### Reference numerals:

1: switch module, 2: obtaining module, 3: control module, 4: load, V_{dd}: power supply, and 5: linear regulator;
11: first input end of the switch module, 12: output end of the switch module, 13: second input of the switch module, 21: input end of the obtaining module, 22: output end of the obtaining module, 31: input end of the control module, 32: output end of the control module, 41: first end of the load, and 42: second end of the load;
23: performance monitor and 24: voltage sensor;
231: input end of the performance monitor, 232: first output end of the performance monitor, 233: second output end of the performance monitor, 234: third output end of the performance monitor, 235: fourth output end of the performance monitor, 241: input end of the voltage sensor, 242: first output end of the voltage sensor, and 243: second output end of the voltage sensor;
31: first comparison unit, 32: first decision unit, 33: first storage unit, and 34: first counting unit;
311: first input end of the first comparison unit, 312: second input end of the first comparison unit, 313: third input end of the first comparison unit, 314: fourth input end of the first comparison unit, 315: output end of the first comparison unit, 316: fifth input end of the first comparison unit, 321: first input end of the first decision unit, 322: first output end of the first decision unit, 323: second input end of the first decision unit, 324: second output end of the first decision unit, 325: third input end of the first decision unit,
331: first input end of the first storage unit, 332: second input end of the first storage unit,
333: output end of the first storage unit, 341: input end of the first counting unit, and 342: output end of the first counting unit;
35: second comparison unit, 36: second counting unit, 37: second decision unit, and 38: second storage unit;
351: first input end of the second comparison unit, 352: second input end of the second comparison unit, 353: third input end of the second comparison unit, 354: fourth input end of the second comparison unit, 355: first output end of the second comparison unit, 356: second output end of the second comparison unit, 361: first input end of the second counting unit, 362: second input end of the second counting unit, 363: output end of the second counting unit; 371: input end of the second decision unit, 372: first output end of the second decision unit,
373: second output end of the second decision unit, 381: first output end of the second storage unit,
382: second output end of the second storage unit, and 383: input end of the second storage unit;
14: drive and Q: transistor;
141: input end of the drive, 142: output end of the drive, g: gate of the transistor, s: source of the transistor, and d: drain of the transistor;
51: sensor, 52: control system, 53: switch unit; and
511: input end of the sensor, 512: output end of the sensor, 521: input end of the control system, 522: output end of the control system, 531: first input end of the switch unit, 532: second input end of the switch unit, and 533: output end of the switch unit.

### DESCRIPTION OF EMBODIMENTS

To make the objectives, technical solutions, and advantages of the present invention clearer, the following further describes the implementations of the present invention in detail with reference to the accompanying drawings.

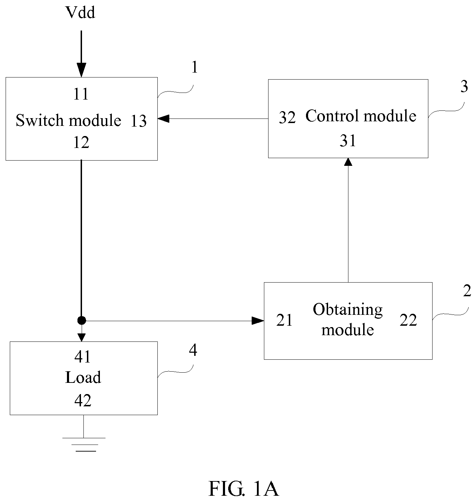

Before the embodiments of the present invention are explained and described in detail, an application scenario of the embodiments of the present invention is first described. In the embodiments of the present invention, when voltage fluctuation occurs in a load in an integrated circuit, to accurately regulate a voltage input to the load, a voltage regulation circuit may be disposed in the integrated circuit. Referring to FIG. 1A, the voltage regulation circuit may include at least one switch module 1, at least one obtaining module 2, and at least one control module 3, and the voltage regulation circuit may be disposed in the integrated circuit in place of a linear regulator to perform voltage regulation on at least one load 4. Alternatively, the voltage regulation circuit may be added to the integrated circuit while an original linear regulator is retained.

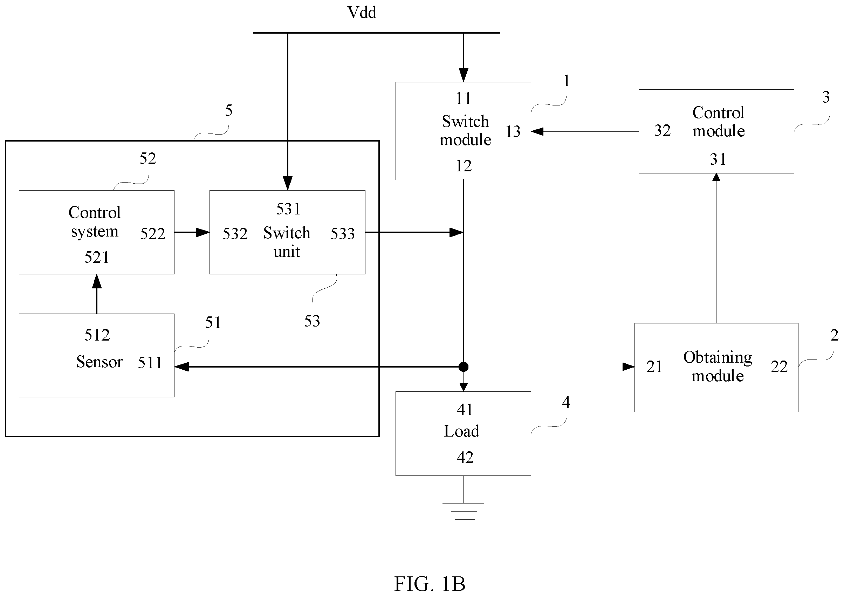

Referring to FIG. 1B, when an original linear regulator 5 is further retained in the integrated circuit, the linear regulator 5 may include a sensor 51, a control system 52, and a switch unit 53. A first input end 531 of the switch unit 53 and a first input end 11 of the switch module 1 are separately connected to a power supply V_{dd}, a second input end 532 of the switch unit 53 is connected to an output end 522 of the control system 52, and an output end 533 of the switch unit 53, an input end 511 of the sensor 51, an output end 12 of the switch module 1, and an input end 21 of the obtaining module 2 are separately connected to a first end 41 of the load 4. An output end 512 of the sensor 51 is connected to an input end 521 of the control system 52. A second input 13 of the switch module 1 is connected to an output end 32 of the control module 3. An output end 22 of the obtaining module 2 is connected to an input end 31 of the control module 3, and a second end 42 of the load 4 is connected to a protection ground.

In addition, in actual application, in addition to the load that requires voltage regulation, the integrated circuit may further include a load that does not require voltage regulation. When the integrated circuit includes the load that does not require voltage regulation, the load that does not require voltage regulation may be directly connected to the power supply V_{dd}.

FIG. 1A is a schematic structural diagram of a voltage regulation circuit according to an embodiment of the present invention. Referring to FIG. 1A, the voltage regulation circuit includes at least one switch module 1, at least one obtaining module 2, at least one control module 3, and at least one load 4. The at least one switch module 1, the at least one obtaining module 2, the at least one control module 3, and the at least one load 4 are in a one-to-one correspondence.

Each of the at least one obtaining module 2 obtains load information of a corresponding load, and sends the load information to a corresponding control module 3. The load information includes a voltage input to the corresponding load 4, an event identifier used to identify whether a voltage drop occurs in the load 4, and a rated current value and a rated voltage value required by the load 4 in a current working status, or the load information includes a quantity of executed instructions and a quantity of performed prediction operations.

Each of the at least one control module 3 generates a switch control signal based on load information output by a corresponding obtaining module 2, and outputs the switch control signal to a corresponding switch module 1.

Each of the at least one switch module 1 regulates, based on a switch control signal output by a corresponding control module 3, a voltage input to the corresponding load 4.

In this embodiment of the present invention, each of the at least one obtaining module 2 may obtain the load information of the corresponding load 4, and send the load information to the corresponding control module 3. The load information may include the voltage input to the corresponding load 4, the event identifier used to identify whether a voltage drop occurs in the load 4, and the rated current value and the rated voltage value required by the load 4 in the current working status. The corresponding control module 3 may generate the switch control signal based on the voltage input to the corresponding load 4, the event identifier, the rated current value, and the rated voltage value that are included in the load information. In addition, the load information may alternatively include the quantity of executed instructions and the quantity of performed prediction operations. Therefore, the control module 3 may alternatively generate the switch control signal based on the quantity of executed instructions and the quantity of performed prediction operations. The load information used when the control module 3 generates the switch control signal is information related to the corresponding load 4, and the load information is accurate information. Therefore, the switch control signal generated by the control module 3 is an accurate signal. After the switch control signal is output to a corresponding switch module 1, the corresponding switch module 1 may regulate, based on the accurate switch control signal, the voltage input to the corresponding load 4, so as to improve voltage regulation accuracy and reliability.

It should be noted that each of the at least one load 4 may also be referred to as a load subdomain. Generally, the load 4 may be an entire logical module in an integrated circuit, for example, a processor core, may be an entire SOC (System On Chip, system on chip) unit, or the like. In this embodiment of the present invention, the load 4 may be divided into a plurality of load subdomains, so as to facilitate accurate control of the load 4. Load subdomain division imposes no impact on behavior and functions of the load 4, and only a power supply layout of a power plane (power plane) of the load 4 is changed.

It should be noted that specific load subdomain division may be implemented based on a specific status of an actual integrated circuit layout, so as to optimize power integrity (PI) and signal integrity (SI).

In addition, in this embodiment of the present invention, the at least one switch module 1, the at least one obtaining module 2, the at least one control module 3, and the at least one load 4 are in a one-to-one correspondence. Therefore, an example in which there is one switch module 1, one obtaining module 2, one control module 3, and one load 4 is used for description. Referring to FIG. 1A, a first input end 11 of the switch module 1 is connected to a power supply V_{dd}, an output end 12 of the switch module 1 is separately connected to an input end 21 of the obtaining module 2 and a first end 41 of the load 4, and a second input 13 of the switch module 1 is connected to an output end 32 of the control module 3. An output end 22 of the obtaining module 2 is connected to an input end 31 of the control module 3, and a second end 42 of the load 4 is connected to a protection ground.

The input end 21 of the obtaining module 2 is connected to the first end 41 of the load. Therefore, when the power supply is powered on, the obtaining module 2 may obtain the load information of the load 4.

It should be noted that the load information obtained by the obtaining module 3 may be information that includes the voltage input to the corresponding load 4, the event identifier used to identify whether a voltage drop occurs in the load 4, and the rated current value and the rated voltage value required by the load 4 in the current working status, or may be information that includes the quantity of executed instructions and the quantity of performed prediction operations. Therefore, an implementation circuit of the obtaining module 3 varies with load information.

In addition, in this embodiment of the present invention, the voltage input to the load is a supply voltage that is provided by the power supply V_{dd} and that is used to supply power to the corresponding load 4 after passing through the switch module.

In a possible implementation, when the load information is the information that includes the voltage input to the corresponding load 4, the event identifier used to identify whether a voltage drop occurs in the load 4, and the rated current value and the rated voltage value required by the load 4 in the current working status, each of the at least one obtaining module 2 includes a performance monitor 23. Therefore, by using the performance monitor 23, the voltage regulation circuit may obtain the voltage input to the corresponding load 4, the event identifier used to identify whether a voltage drop occurs in the load 4, and the rated current value and the rated voltage value required by the load 4 in the current working status, and output the voltage input to the corresponding load, the event identifier, the rated current value, and the rated voltage value to the corresponding control module 3.

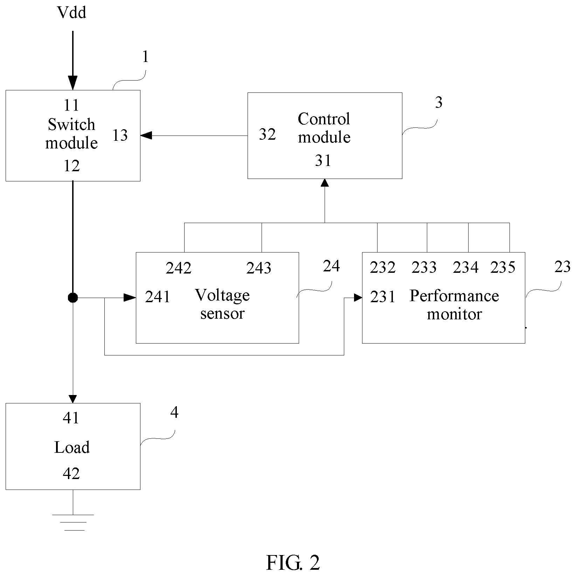

Referring to FIG. 2, an input end 231 of the performance monitor 23 is connected to the output end 12 of the switch module 1, and a first output end 232 of the performance monitor 23, a second output end 233 of the performance monitor 23, a third output end 234 of the performance monitor 23, and a fourth output end 235 of the performance monitor 23 are separately connected to the input end 31 of the control module 3.

In addition, before the load 4 enters the current working status, the performance monitor 23 may receive notification information sent by another function module in the integrated circuit, to notify the performance monitor 23 of a working status that the load is to enter. The performance monitor 23 may determine the voltage input to the corresponding load, the event identifier, the rated current value, and the rated voltage value by using the notification information.

It should be noted that for an operation that the performance monitor 23 determines the voltage input to the corresponding load, the event identifier, the rated current value, and the rated voltage value by using the notification information, refer to a related technology. Details are not described in this embodiment of the present invention.

In actual application, each of the at least one obtaining module 2 further includes a voltage sensor 24.

The voltage sensor 24 obtains the voltage input to the corresponding load 4 and the event identifier used to identify whether a voltage drop occurs in the load 4, and sends the voltage input to the corresponding load and the event identifier to the control module 3 corresponding to the obtaining module 2.

Referring to FIG. 2, an input end 241 of the voltage sensor 24 is connected to the output end 22 of the switch module 1, and a first output end 242 of the voltage sensor 24 and a second output end 243 of the voltage sensor 24 are separately connected to the input end 31 of the control module 3.

It should be noted that the voltage sensor 24 may obtain the load information in real time, and for an operation that the voltage sensor 24 obtains the load information in real time, refer to a related technology. Details are also not described in this embodiment of the present invention.

In another possible implementation, when the load information is the information that includes the quantity of executed instructions and the quantity of performed prediction operations, the obtaining module 3 may further include a memory, a counter, and a controller, and may obtain the quantity of executed instructions and the quantity of performed prediction operations by using the memory, the counter, and the controller.

It should be noted that for an operation that the voltage regulation circuit obtains the quantity of executed instructions and the quantity of performed prediction operations by using the memory, the counter, and the controller, refer to a related technology. Details are not described in this embodiment of the present invention.

A manner in which the voltage regulation circuit generates the switch control signal by using the control module varies with load information. For details, refer to the following two cases.

In a first case, the load information includes the voltage input to the corresponding load 4, the event identifier used to identify whether a voltage drop occurs in the load 4, and the rated current value and the rated voltage value required by the load 4 in the current working status.

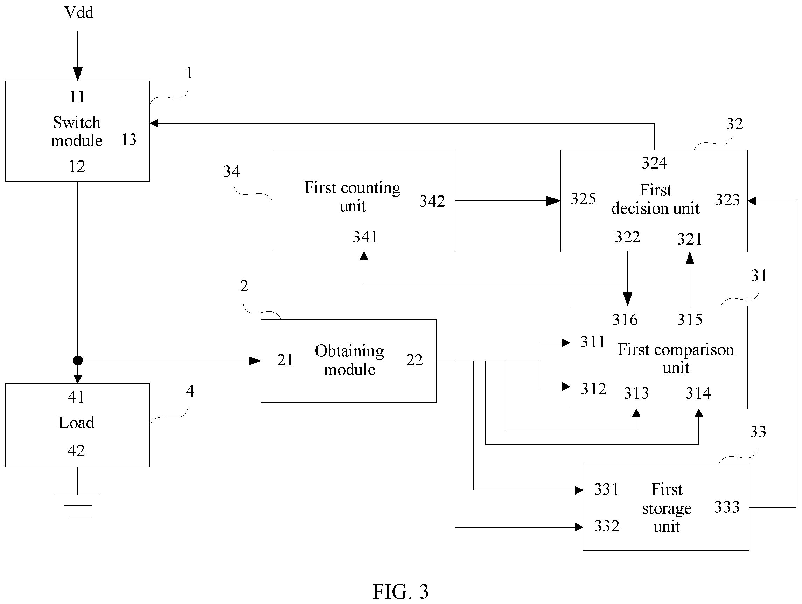

Referring to FIG. 3, each of the at least one control module 3 includes a first comparison unit 31, a first decision unit 32, and a first storage unit 33.

When the load information includes the voltage input to the corresponding load, the event identifier, the rated current value, and the rated voltage value, and the event identifier is an identifier used to indicate that voltage fluctuation occurs in the load 4, the first comparison unit 31 compares the voltage input to the corresponding load with a preset voltage threshold to generate a first quantity of switches configured to conduct the corresponding switch module 1, and outputs the first quantity of switches to the first decision unit 32.

The first storage unit 33 determines, based on the rated current value and the rated voltage value, a second quantity of switches configured to conduct the corresponding switch module 1 in the current working status, and outputs the second quantity of switches to the first decision unit 32.

The first decision unit 32 generates a first control signal based on the first quantity of switches and the second quantity of switches, and outputs the first control signal to the switch module 1 corresponding to the control module 3, to regulate the voltage fluctuation of the load 4 by using the switch module 1.

The first decision unit 32 outputs a first control identifier to the first comparison unit 31, to instruct the first comparison unit 31 to stop comparing the voltage input to the corresponding load with the preset voltage threshold. The first control identifier is used to identify that the voltage fluctuation of the load 4 is currently regulated by using the switch module 1.

The first decision unit 32 generates a second control signal after first specified duration based on the second quantity of switches, and outputs the second control signal to the corresponding switch module 1, to restore a working status of the load 4 to the current working status by using the switch module 1.

In addition, the first decision unit 32 may further output a second control identifier to the first comparison unit 31 after second specified duration, to instruct the first comparison unit 31 to compare the voltage input to the corresponding load with the preset voltage threshold again. The second control identifier is used to identify that regulation of the voltage input to the load 4 has been stopped and the voltage input to the load 4 needs to be regulated again by using the switch module 1.

In another possible implementation, when voltage fluctuation occurs in the load, a time for the voltage fluctuation is limited. Therefore, to help the voltage regulation circuit to restore the voltage input to the load to a voltage required by the current working status after regulating the voltage fluctuation of the load, the control module 3 may further include a first counting unit 34.

The first counting unit 34 performs first counting based on the first control identifier, and outputs a first end identifier to the first decision unit 32 after the first counting ends, to indicate, to the first decision unit 32, that the first specified duration expires. The first control identifier is obtained when the first decision unit 32 simultaneously outputs the first control identifier to the first comparison unit 31 and the first counting unit 34.

Further, the first counting unit 34 may further perform second counting based on a third control identifier, and output a second end identifier to the first decision unit 32 after the second counting ends, to indicate, to the first decision unit 32, that the second specified duration expires. The third control identifier is obtained when the first decision unit 32 simultaneously outputs the second control signal to the corresponding switch module 1 and the first counting unit 34.

In addition, in addition to outputting the third control identifier to the first counting unit 34, the first decision unit 32 may further output the second control identifier to the first comparison unit 31, to instruct the first comparison unit 31 to continue to stop comparing the voltage input to the corresponding load with the preset voltage threshold. The second control identifier is used to identify that the working status of the load 4 has been restored to the current working status by using the switch module 1.

Referring to FIG. 3, a first input end 311 of the first comparison unit 31, a second input end 312 of the first comparison unit 31, a third input end 313 of the first comparison unit 31, a fourth input end 314 of the first comparison unit 31, a first input end 331 of the first storage unit 33, and a second input end 332 of the first storage unit 33 are separately connected to the output end 22 of the obtaining module 2. An output end 315 of the first comparison unit 31 is connected to a first input end 321 of the first decision unit 32, and a fifth input end 316 of the first comparison unit 31 and a first input end 341 of the first counting unit 34 are separately connected to a first output end 322 of the first decision unit 32. An output end 333 of the first storage unit 33 is connected to a second input end 323 of the first decision unit 32, and a second output end 324 of the first decision unit 32 is connected to the second input end 13 of the switch module 1. A third input end 325 of the first decision unit 32 is connected to an output end 342 of the first counting unit 34.

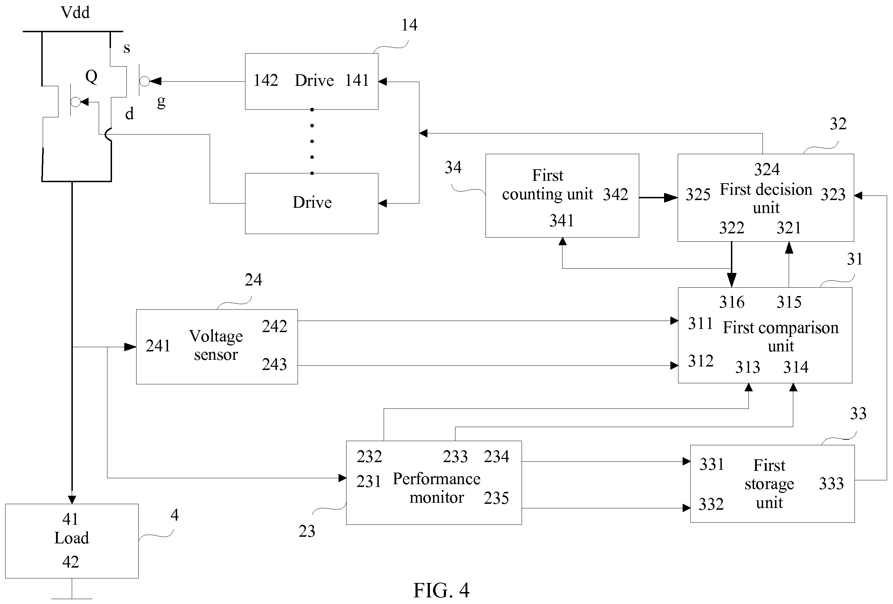

The obtaining module 2 includes the performance monitor 23 and the voltage sensor 24. Therefore, referring to FIG. 4, the first input end 311 of the first comparison unit 31 is connected to the first output end 242 of the voltage sensor 24, the second input end 312 of the first comparison unit 31 is connected to the output end 243 of the voltage sensor, the third input end 313 of the first comparison unit 31 is connected to the first output end 232 of the performance monitor 23, and the fourth input end of the first comparison unit 31 is connected to the second output end 233 of the performance monitor 23. The first input end 331 of the first storage unit 33 is connected to the third output end 234 of the performance monitor 23, and the second input end 332 of the first storage unit 33 is connected to the fourth output end of the performance monitor 23.

The first comparison unit 31, the first decision unit 32, the first storage unit 33, and the first counting unit 34 in the first case are separately described in detail below.

### First comparison unit 31

The first comparison unit 31 may receive the voltage input to the corresponding load and the event identifier that are sent by the obtaining module 2. When the event identifier is an identifier used to indicate that voltage fluctuation occurs in the load 4, the first comparison unit 31 may compare the voltage input to the corresponding load with the preset voltage threshold, determine a voltage fluctuation difference between the voltage input to the corresponding load and the preset voltage threshold, obtain, from a stored correspondence between a voltage fluctuation difference and a quantity of switches based on the voltage fluctuation difference, a quantity of switches that is corresponding to the voltage fluctuation difference, determine the obtained quantity of switches as the first quantity of switches, and output the first quantity of switches to the first decision unit 32.

It should be noted that the preset voltage threshold may be input by an external component to the first comparison unit 31, or may be pre-stored in the first comparison unit 32. The preset voltage threshold may be 7 V, 8 V, 9 V, or the like.

After determining the voltage fluctuation difference, the first comparison unit 31 may further compare the voltage fluctuation difference with a preset fluctuation threshold. When the voltage fluctuation difference is greater than or equal to the preset fluctuation threshold, the first comparison unit determines the first quantity of switches. When the voltage fluctuation difference is less than the preset fluctuation threshold, the first comparison unit may end a current operation.

It should be noted that the preset fluctuation threshold may be preset. For example, the preset fluctuation threshold may be 3 V, 4 V, 5 V, or the like.

In addition, in addition to generating the first quantity of switches based on the voltage input to the corresponding load and the preset voltage threshold, the first comparison unit 31 may further generate, based on the voltage input to the corresponding load and the preset voltage threshold, a first breakover voltage used to conduct the corresponding switch module 1.

Specifically, the first comparison unit 31 may determine the voltage fluctuation difference based on the voltage input to the corresponding load and the preset voltage threshold, obtain, from a stored correspondence between a voltage fluctuation difference and a breakover voltage based on the voltage fluctuation difference, a breakover voltage corresponding to the voltage fluctuation difference, and determine the obtained breakover voltage as the first breakover voltage.

In addition, when the event identifier is an identifier used to indicate that no voltage fluctuation occurs in the load 4, the first comparison unit 31 may perform no operation.

Further, when the first comparison unit 31 receives the first control identifier or the third control identifier sent by the first decision unit 32, the first comparison unit 31 may stop the current operation. When receiving the second control identifier, the first comparison unit 31 may compare the voltage input to the corresponding load with the preset voltage threshold again.

### First storage unit 33

The first storage unit 33 may receive the rated current value and the rated voltage value that are sent by the obtaining module 2, and determine, based on the rated current value and the rated voltage value, the second quantity of switches configured to conduct the corresponding switch module 1 in the current working status.

Specifically, the first storage unit 33 obtains, from a stored correspondence between a quantity of switches and a rated current value as well as a rated voltage value based on the rated current value and the rated voltage value, a quantity of switches that is corresponding to the rated current value and the rated voltage value, and determines the obtained quantity of switches as the second quantity of switches.

For example, when the rated current value and the rated voltage value obtained by the first storage unit 45 are respectively 1 A and 3 V, it is learned, from a correspondence that is between a quantity of switches and a rated current value as well as a rated voltage value and that is shown in Table 1, that a quantity of switches that is corresponding to the rated current value 1 A and the rated voltage value 3 V is 4, and the obtained quantity of switches 4 is determined as the second quantity of switches.

**Table 1**

| Rated current value | Rated voltage value | Quantity of switches |
|---|---|---|
| 1 A | 3 V | 4 |
| 1 A | 5 V | 5 |
| 3 A | 10 V | 7 |
| ... | ... | ... |

It should be noted that in this embodiment of the present invention, the correspondence that is between a quantity of switches and a rated current value as well as a rated voltage value and that is shown in Table 1 is merely used as an example for description, and Table 1 constitutes no limitation on this embodiment of the present invention.

In addition, the correspondence between a quantity of switches and a rated current value as well as a rated voltage value may be pre-stored in the first storage unit 33.

In another possible implementation, in addition to pre-storing the correspondence between a quantity of switches and a rated current value as well as a rated voltage value, the first storage unit 33 may further store a correspondence between a breakover voltage and a rated current value as well as a rated voltage value. When receiving the rated current value and the rated voltage value that are sent by the obtaining module 2, the first storage unit 33 may obtain, from the correspondence between a breakover voltage value and a rated current value as well as a rated voltage value based on the rated current value and the rated voltage value, a breakover voltage corresponding to the rated current value and the rated voltage value, and determine the obtained breakover voltage as a second breakover voltage.

### First decision unit 32

The first decision unit 32 may receive the first quantity of switches that is output by the first comparison unit 31 and the second quantity of switches that is output by the first storage unit 33, subtract the second quantity of switches from the first quantity of switches to obtain a switch quantity difference, convert the switch quantity difference into a form of a digital signal, determine the switch quantity difference converted into the form of the digital signal to serve as the first control signal, and output the first control signal to the switch module 1, to regulate the voltage fluctuation of the load 4 by using the switch module 1.

In addition, the first comparison unit 31 may further output the first breakover voltage, and the first storage unit 33 may output the second breakover voltage. Therefore, the first decision unit 32 may further subtract the second breakover voltage from the first breakover voltage to obtain a breakover voltage difference, convert the breakover voltage difference into a form of a digital signal, and determine the breakover voltage difference in the form of the digital signal as the first control signal.

It should be noted that for an operation that the first decision unit 32 converts the switch quantity difference or the breakover voltage difference into the form of the digital signal, refer to a related technology. Details are not described in this embodiment of the present invention.

Further, when outputting the first control signal to the corresponding switch module 1, the first decision unit 32 further outputs the first control identifier to the first comparison unit 31 and the first counting unit 34, and when receiving the first end identifier after the first specified duration, the first decision unit 32 may convert the second quantity of switches into a form of a digital signal, determine the second quantity of switches that is converted into the form of the digital signal to serve as the second control signal, and output the second control signal to the corresponding switch module 1. In addition, the first decision unit 32 may output the second control identifier to the first comparison unit 31 and the first counting unit 34, so that the first comparison unit 31 continues to stop comparing the voltage input to the corresponding load with the preset voltage threshold, and the first counting unit 34 performs second counting.

It should be noted that the first specified duration is duration in which the first counting unit 34 performs first counting, and the first specified duration may be preset. For example, the first specified duration may be duration in which the first counting unit 34 counts from 1 to 10.

Likewise, the second specified duration may be duration in which the first counting unit 34 performs second counting, and the second specified duration may be preset. For example, the second specified duration may be duration in which the first counting unit 34 counts from 1 to 10.

### First counting unit 34

The fifth input end 316 of the first comparison unit 31 and the first input end 341 of the first counting unit 34 are separately connected to the first output end 322 of the first decision unit 32. Therefore, the first decision unit 32 may output the first control identifier or the third control identifier to the first counting unit 34 and the first comparison unit 31. When receiving the first control identifier, the first counting unit 34 may perform first counting. When a count value reaches a preset count value, the first counting unit 34 determines that the first counting ends, and returns the first end identifier to the first decision unit 32.

After sending the first end identifier to the first decision unit, the first counting unit may perform second counting. Alternatively, when receiving the second control identifier, the first counting unit 34 performs second counting, and when a count value reaches a preset count value, determines that the second counting ends, and returns the second end identifier to the first decision unit 32.

In a second case, the load information includes the quantity of executed instructions and the quantity of performed prediction operations.

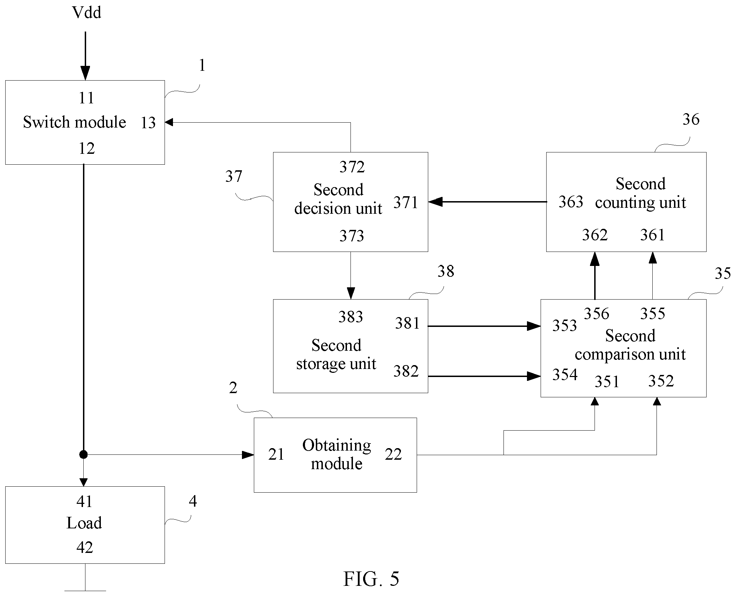

Referring to FIG. 5, each of the at least one control module 3 includes a second comparison unit 35, a second decision unit 36, a second counting unit 37, and a second storage unit 38.

When the load information includes the quantity of executed instructions and the quantity of performed prediction operations, the second comparison unit 35 compares the quantity of executed instructions with a first quantity threshold to generate a first comparison value, compares the quantity of performed prediction operations with a second quantity threshold to generate a second comparison value, and outputs the first comparison value and the second comparison value to the second counting unit 36. The first quantity threshold and the second quantity threshold are sent by the second storage unit 38 to the second comparison unit 35 in a current counting period.

The second counting unit 36 combines the first comparison value with the second comparison value to obtain a combination value, when the combination value is different from the third quantity threshold, assigns the combination value to the third quantity threshold, determines whether the current counting period ends, when the current counting period ends, determines a fourth control identifier based on the third quantity threshold determined when the current counting period ends, and outputs the fourth control identifier to the second decision unit 37. The fourth control identifier is used to identify whether the quantity of executed instructions and the quantity of performed prediction operations are normal.

The second decision unit 37 generates a third control signal and an update signal based on the fourth control identifier, and outputs the third control signal to the corresponding switch module 1, to regulate voltage fluctuation of the load 4 by using the switch module 1.

Further, the second decision unit 37 may further output the update signal to the second storage unit 38, so as to update the first quantity threshold and the second quantity threshold that are stored in the second storage unit 38.

Referring to FIG. 5, a first input end 351 of the second comparison unit 35 and a second input end 352 of the second comparison unit 35 are separately connected to the output end 22 of the obtaining module 2, a third input end 353 of the second comparison unit 35 is connected to a first output end 381 of the second storage unit 38, a fourth input end 354 of the second comparison unit 35 is connected to a second output end 382 of the second storage unit 38, a first output end 355 of the second comparison unit 35 is connected to a first input end 361 of the second counting unit 36, and a second output end 356 of the second comparison unit 35 is connected to a second input end 362 of the second counting unit 36. An output end 363 of the second counting unit 36 is connected to an input end 371 of the second decision unit 37. A first output end 372 of the second decision unit 37 is connected to the second input end 13 of the switch module 1, and a second output end 373 of the second decision unit 37 is connected to an input end 383 of the second storage unit 38.

The second comparison unit 35, the second counting unit 36, the second decision unit 37, and the second storage unit 38 in the second case are described in detail below:

### Second comparison unit 35

The first input end 351 of the second comparison unit 35 and the second input end 352 of the second comparison unit 35 are separately connected to the output end 22 of the obtaining module 2, the third input end 353 of the second comparison unit 35 is connected to the first output end 381 of the second storage unit 38, and the fourth input end 354 of the second comparison unit 35 is connected to the second output end 382 of the second storage unit. Therefore, the second comparison unit 35 may receive the quantity of executed instructions and the quantity of performed prediction operations that are output by the obtaining module 2, receive the first quantity threshold and the second quantity threshold that are output by the second storage unit 38, compare the first quantity threshold with the quantity of executed instructions to obtain the first comparison value, and compare the second quantity threshold with the quantity of performed prediction operations to obtain the second comparison value.

It should be noted that the first comparison value is used to indicate whether the first quantity threshold is the same as the quantity of executed instructions; when the first quantity threshold is the same as the quantity of executed instructions, the first comparison value is a first value; when the first quantity threshold is different from the quantity of executed instructions, the first comparison value is a second value.

Likewise, the second comparison value is used to indicate whether the second quantity threshold is the same as the quantity of performed prediction operations; when the second quantity threshold is the same as the quantity of performed prediction operations, the second comparison value is a first value; when the second quantity threshold is different from the quantity of performed prediction operations, the first comparison value is a second value.

In addition, the first value and the second value may be preset. For example, the first value may be 1 or 0, and the second comparison value may be 1 or 0. The first value and the second value are two opposite values; when the first value is 1, the second value is 0; when the first value is 0, the second value is 1.

In addition, the first output end 355 of the second comparison unit 35 is connected to the first input end 361 of the second counting unit 36, and the second output end 356 of the second comparison unit 35 is connected to the second input end 362 of the second counting unit 36. Therefore, the second comparison unit 35 may output the first comparison value and the second comparison value to the second counting unit 36.

### Second counting unit 36

The calculation unit 36 may receive the first comparison value and the second comparison value that are sent by the second comparison unit 35, combine the first comparison value with the second comparison value to obtain the combination value, and compare the combination value with the third quantity threshold. When the combination value is the same as the third quantity threshold, the second counting unit 36 may perform counting, and increase a count value by 1. When the combination value is different from the third quantity threshold, the second counting unit 36 assigns the combination value to the third quantity threshold, determines whether the current counting period ends, and when the current counting period ends, determines the fourth control identifier based on the third quantity threshold determined when the current counting period ends. The output end 363 of the second counting unit 36 is connected to the input end 371 of the second decision unit 37. Therefore, the second counting unit 36 may output the fourth control identifier to the second decision unit 37, and when the current counting period does not end, repeatedly compare the combination value with the third quantity threshold until the current counting period ends.

The first comparison value may be combined with the second comparison value in a manner in which the first comparison value is followed by the second comparison value, or in a manner in which the second comparison value is followed by the first comparison value.

For example, when the first comparison value is 1 and the second comparison value is 0, the combination value obtained by combining the first comparison value with the second comparison value may be 10, or may be 01.

In addition, an operation that the second comparison unit 35 determines whether the current counting period ends may be as follows: Each time the second counting unit 36 increases a count value by 1, the second comparison unit 35 compares a current count value obtained after 1 is increased with a preset counting period, and when the current count value obtained after 1 is increased is equal to the preset counting period, determines that the current counting period ends, or when the current count value obtained after 1 is increased is not equal to the preset counting period, determines that the current counting period does not end.

It should be noted that the preset counting period may be preset. For example, the preset counting period may be 5, 6, 7, or the like.

For example, the preset counting period is 5. When the combination value is the same as the third quantity threshold, the second counting unit 36 may increase the count value by 1 to obtain a count value 4 obtained after 1 is increased. Because the count value 4 obtained after 1 is increased is not equal to the preset counting period 5, the second comparison unit 35 continues to compare the combination value with the third quantity threshold in the current counting period.

It should be noted that the third quantity threshold may be pre-stored in the second counting unit 36, or may be input by another external component to the second comparison unit 35. In addition, the third quantity threshold may be preset. For example, the third quantity threshold may be 11, 10, 01, or the like.

### Second decision unit 37

The second decision unit 37 may receive the fourth control identifier output by the second counting unit 36, obtain, from a stored correspondence between a control identifier, a control signal, and an update signal based on the fourth control identifier, a control signal and an update signal that are corresponding to the fourth control identifier, and determine the obtained control signal as the third control signal.

The first output end 372 of the second decision unit 37 is connected to the second input end 13 of the switch module 1, and the second output end 373 of the second decision unit is connected to the input end 383 of the second storage unit 38. Therefore, the second decision unit 37 may output the third control signal to the switch module 1 to regulate the voltage fluctuation of the load 4 by using the switch module 1, and output the update signal to the second storage unit 38 to update the first quantity threshold and the second quantity threshold that are stored in the second storage unit 38.

### Second storage unit 38

The second storage unit 38 may receive the update signal output by the second decision unit 37, obtain a corresponding first quantity threshold and a corresponding second quantity threshold from a stored correspondence between an update signal and a first quantity threshold as well as a second quantity threshold based on the update signal, and output the obtained first quantity threshold and second quantity threshold to the second comparison unit 35 in the current counting period, so that the second comparison unit 35 performs a new round of comparison.

In this embodiment of the present invention, each of the at least one switch module 1 includes at least one transistor Q and at least one drive 14, and the at least one transistor Q and the at least one drive 14 are in a one-to-one correspondence.

Each of the at least one drive 14 drives a corresponding transistor 14, and each of the at least one transistor Q is conducted or disconnected based on the switch control signal as driven by a corresponding drive 14, to regulate the voltage input to the corresponding load 4.

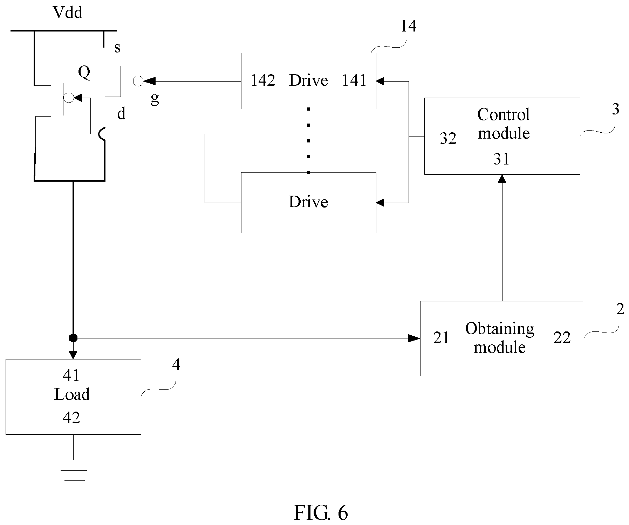

Referring to FIG. 6, for each of the at least one drive 14 and each of the at least one transistor Q, an input end 141 of the drive 14 is connected to the output end 32 of the control module 32, an output end 142 of the drive 14 is connected to a gate g of the transistor Q, a source s of the transistor Q is connected to the power supply V_{dd}, and a drain d of the transistor Q is connected to the load 4 corresponding to the switch module 1.

The input end 141 of the drive 14 is connected to the output end 32 of the control module 32, and the output end of the drive 14 is connected to the gate g of the transistor Q. Therefore, when the corresponding transistor Q is driven by the drive 14, if the switch control signal is a first voltage signal, the transistor is disconnected, or if the switch control signal is a second voltage signal, the transistor may be conducted, to change a resistance value of an equivalent resistor of the at least one transistor, and regulate the voltage input to the load.

It should be noted that the first voltage signal is used to disconnect the transistor, the second voltage signal is used to conduct the transistor, and the first voltage signal and the second voltage signal are two opposite signals.

It should be noted that the transistor in this embodiment of the present invention may be an NMOS (N-channel Metal Oxide Semiconductor, N-channel metal oxide semiconductor) transistor, a PMOS (P-channel Metal Oxide Semiconductor, P-channel metal oxide semiconductor) transistor, or a CMOS (Complementary Metal Oxide Semiconductor, complementary metal oxide semiconductor) transistor. Certainly, the transistor may alternatively be another transistor or an equivalent switch, for example, power gating (power gating).

In addition, in this embodiment of the present invention, the switch module may include only the transistor and include no drive, and directly controls conduction or disconnection of the at least one transistor by using the switch control signal.

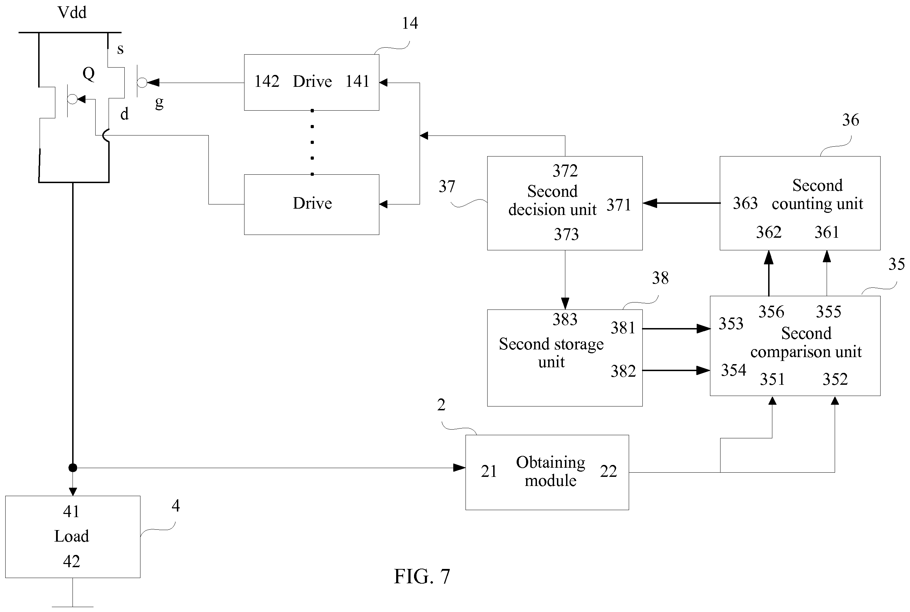

Moreover, when the load information is the information that includes the voltage input to the corresponding load, the event identifier used to identify whether a voltage drop occurs in the load, and the rated current value and the rated voltage value required by the load in the current working status, referring to FIG. 4, the second output end 324 of the first decision unit 32 is connected to the input end 141 of the at least one drive 14. When the load information includes the quantity of executed instructions and the quantity of performed prediction operations, referring to FIG. 7, the first output end 372 of the second decision unit 37 is connected to the input end 141 of the at least one drive 14.

In this embodiment of the present invention, each of the at least one obtaining module may obtain the load information of the corresponding load, and send the load information to the corresponding control module. The load information may include the voltage input to the corresponding load, the event identifier used to identify whether a voltage drop occurs in the load, and the rated current value and the rated voltage value required by the load in the current working status. The corresponding control module may generate the switch control signal based on the voltage input to the corresponding load, the event identifier, the rated current value, and the rated voltage value that are included in the load information. In addition, the load information may alternatively include the quantity of executed instructions and the quantity of performed prediction operations. Therefore, the control module may alternatively generate the switch control signal based on the quantity of executed instructions and the quantity of performed prediction operations. The load information used when the control module generates the switch control signal is information related to the corresponding load. Therefore, when a voltage fluctuation event such as a voltage drop occurs in the load, the control module may generate the switch control signal in time based on the load information. After the switch control signal is output to the corresponding switch module, the corresponding switch module may regulate, based on the switch control signal, the voltage input to the corresponding load, so as to improve voltage regulation accuracy and reliability. Moreover, when the switch module regulates, by using the switch control signal, the voltage input to the load, the switch control module may divide the supply voltage provided by the power supply, so as to reduce the supply voltage, and reduce losses of the integrated circuit.

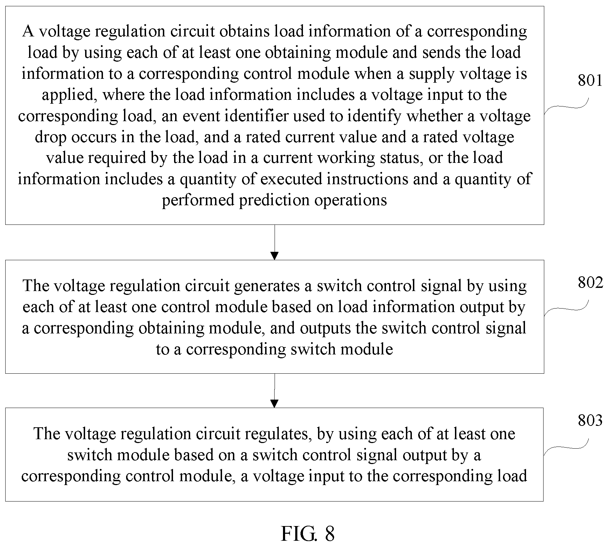

FIG. 8 is a flowchart of a voltage regulation method according to an embodiment of the present invention. Referring to FIG. 8, the method includes the following steps.

Step 801: A voltage regulation circuit obtains load information of a corresponding load by using each of the at least one obtaining module and sends the load information to a corresponding control module when a supply voltage is applied, where the load information includes a voltage input to the corresponding load, an event identifier used to identify whether a voltage drop occurs in the load, and a rated current value and a rated voltage value required by the load in a current working status, or the load information includes a quantity of executed instructions and a quantity of performed prediction operations.

The load information obtained by the obtaining module may be information that includes the voltage input to the corresponding load, the event identifier used to identify whether a voltage drop occurs in the load, and the rated current value and the rated voltage value required by the load in the current working status, or may be information that includes the quantity of executed instructions and the quantity of performed prediction operations. Therefore, an implementation circuit of the obtaining module varies with load information.

In a possible implementation, when the load information is the information that includes the voltage input to the corresponding load, the event identifier used to identify whether a voltage drop occurs in the load, and the rated current value and the rated voltage value required by the load in the current working status, each of the at least one obtaining module includes a performance monitor. The voltage regulation circuit may obtain the voltage input to the corresponding load, the event identifier, the rated current value, and the rated voltage value by using the performance monitor, and output the voltage input to the corresponding load, the event identifier, the rated current value, and the rated voltage value to the corresponding control module.

Before the load enters the current working status, the performance monitor may receive notification information sent by another function module in an integrated circuit, to notify the performance monitor of a working status that the load is to enter. The performance monitor may determine the voltage input to the corresponding load, the event identifier, the rated current value, and the rated voltage value by using the notification information.

It should be noted that for an operation that the performance monitor determines the voltage input to the corresponding load, the event identifier, the rated current value, and the rated voltage value by using the notification information, refer to a related technology. Details are not described in this embodiment of the present invention.

In actual application, each of the at least one obtaining module further includes a voltage sensor.

When the supply voltage is applied, the voltage regulation circuit may obtain, by using the voltage sensor, the voltage input to the corresponding load and the event identifier used to identify whether a voltage drop occurs in the load, and send the voltage input to the corresponding load and the event identifier to the control module corresponding to the obtaining module.

It should be noted that the voltage sensor may obtain the load information in real time, and for an operation that the voltage sensor obtains the load information in real time, refer to a related technology. Details are also not described in this embodiment of the present invention.

In another possible implementation, when the load information is the information that includes the quantity of executed instructions and the quantity of performed prediction operations, the obtaining module may further include a memory, a counter, and a controller, and may obtain the quantity of executed instructions and the quantity of performed prediction operations by using the memory, the counter, and the controller.

It should be noted that for an operation that the voltage regulation circuit obtains the quantity of executed instructions and the quantity of performed prediction operations by using the memory, the counter, and the controller, refer to a related technology. Details are not described in this embodiment of the present invention.

Step 802: The voltage regulation circuit generates a switch control signal by using each of the at least one control module based on load information output by a corresponding obtaining module, and outputs the switch control signal to a corresponding switch module.

It may be learned from step 801 that the load information may include the voltage input to the corresponding load, the event identifier, the rated current value, and the rated voltage value, or the load information includes the quantity of executed instructions and the quantity of performed prediction operations. Therefore, a manner in which the voltage regulation circuit generates the switch control signal by using each of the at least one control module based on the load information output by the corresponding obtaining module, and outputs the switch control signal to the corresponding switch module varies with load information. For details, refer to the following two cases.

In a first case, when the load information includes the voltage input to the corresponding load, the event identifier used to identify whether a voltage drop occurs in the load, and the rated current value and the rated voltage value required by the load in the current working status, each of the at least one control module includes a first comparison unit, a first decision unit, and a first storage unit.

When the event identifier is an identifier used to indicate that voltage fluctuation occurs in the load, the voltage regulation circuit generates the switch control signal by performing the following steps A to E, and outputs the switch control signal to the corresponding switch module.

Step A: The voltage regulation circuit compares the voltage input to the corresponding load with a preset voltage threshold by using the first comparison unit, generates a first quantity of switches configured to conduct the corresponding switch module, and outputs the first quantity of switches to the first decision unit.

Specifically, the voltage input to the corresponding load and the event identifier that are sent by the obtaining module may be received by using the first comparison unit. When the event identifier is an identifier used to indicate that voltage fluctuation occurs in the load, the first comparison unit 31 may compare the voltage input to the corresponding load with the preset voltage threshold, determine a voltage fluctuation difference between the voltage input to the corresponding load and the preset voltage threshold, obtain, from a stored correspondence between a voltage fluctuation difference and a quantity of switches based on the voltage fluctuation difference, a quantity of switches that is corresponding to the voltage fluctuation difference, determine the obtained quantity of switches as the first quantity of switches, and output the first quantity of switches to the first decision unit.

It should be noted that the preset voltage threshold may be input by an external component to the first comparison unit, or may be pre-stored in the first comparison unit. The preset voltage threshold may be 7 V, 8 V, 9 V, or the like.

After determining the voltage fluctuation difference, the first comparison unit may further compare the voltage fluctuation difference with a preset fluctuation threshold. When the voltage fluctuation difference is greater than or equal to the preset fluctuation threshold, the first comparison unit determines the first quantity of switches. When the voltage fluctuation difference is less than the preset fluctuation threshold, the first comparison unit may end a current operation.

It should be noted that the preset fluctuation threshold may be preset. For example, the preset fluctuation threshold may be 3 V, 4 V, 5 V, or the like.

In addition, in addition to generating the first quantity of switches based on the voltage input to the corresponding load and the preset voltage threshold, the first comparison unit may further generate, based on the voltage input to the corresponding load and the preset voltage threshold, a first breakover voltage used to conduct the corresponding switch module.

Specifically, the first comparison unit may determine the voltage fluctuation difference based on the voltage input to the corresponding load and the preset voltage threshold, obtain, from a stored correspondence between a voltage fluctuation difference and a breakover voltage based on the voltage fluctuation difference, a breakover voltage corresponding to the voltage fluctuation difference, and determine the obtained breakover voltage as the first breakover voltage.

In addition, when the event identifier is an identifier used to indicate that no voltage fluctuation occurs in the load, the first comparison unit may perform no operation.

Step B: The voltage regulation circuit determines, by using the first storage unit based on the rated current value and the rated voltage value, a second quantity of switches configured to conduct the corresponding switch module in the current working status, and outputs the second quantity of switches to the first decision unit.

Specifically, the first storage unit obtains, from a stored correspondence between a quantity of switches and a rated current value as well as a rated voltage value based on the rated current value and the rated voltage value, a quantity of switches that is corresponding to the rated current value and the rated voltage value, and determines the obtained quantity of switches as the second quantity of switches.

For example, when the rated current value and the rated voltage value obtained by the first storage unit are respectively 1 A and 3 V, it is learned, from a correspondence that is between a quantity of switches and a rated current value as well as a rated voltage value and that is shown in Table 1, that a quantity of switches that is corresponding to the rated current value 1 A and the rated voltage value 3 V is 4, and the obtained quantity of switches 4 is determined as the second quantity of switches.

**Table 1**

| Rated current value | Rated voltage value | Quantity of switches |
|---|---|---|
| 1 A | 3 V | 4 |
| 1 A | 5 V | 5 |
| 3 A | 10 V | 7 |
| ... | ... | ... |

It should be noted that in this embodiment of the present invention, the correspondence that is between a quantity of switches and a rated current value as well as a rated voltage value and that is shown in Table 1 is merely used as an example for description, and Table 1 constitutes no limitation on this embodiment of the present invention.

In addition, the correspondence between a quantity of switches and a rated current value as well as a rated voltage value may be pre-stored in the first storage unit.

In another possible implementation, in addition to pre-storing the correspondence between a quantity of switches and a rated current value as well as a rated voltage value, the first storage unit may further store a correspondence between a breakover voltage and a rated current value as well as a rated voltage value. When receiving the rated current value and the rated voltage value that are sent by the obtaining module, the first storage unit may obtain, from the correspondence between a breakover voltage value and a rated current value as well as a rated voltage value based on the rated current value and the rated voltage value, a breakover voltage corresponding to the rated current value and the rated voltage value, and determine the obtained breakover voltage as a second breakover voltage.

Step C: The voltage regulation circuit generates a first control signal by using the first decision unit based on the first quantity of switches and the second quantity of switches, and outputs the first control signal to the switch module corresponding to the control module, to regulate the voltage fluctuation of the load by using the switch module.

Specifically, the first decision unit may receive the first quantity of switches that is output by the first comparison unit and the second quantity of switches that is output by the first storage unit, subtract the second quantity of switches from the first quantity of switches to obtain a switch quantity difference, convert the switch quantity difference into a form of a digital signal, determine the switch quantity difference converted into the form of the digital signal to serve as the first control signal, and output the first control signal to the switch module, to regulate the voltage fluctuation of the load by using the switch module.

In addition, the first comparison unit may further output the first breakover voltage, and the first storage unit may output the second breakover voltage. Therefore, the first decision unit may further subtract the second breakover voltage from the first breakover voltage to obtain a breakover voltage difference, convert the breakover voltage difference into a form of a digital signal, and determine the breakover voltage difference in the form of the digital signal as the first control signal.

It should be noted that for an operation that the first decision unit converts the switch quantity difference or the breakover voltage difference into the form of the digital signal, refer to a related technology. Details are not described in this embodiment of the present invention.

Step D: The voltage regulation circuit outputs a first control identifier to the first comparison unit by using the first decision unit, and when the first comparison unit receives the first control identifier, the first comparison unit may stop comparing the voltage input to the corresponding load with the preset voltage threshold, where the first control identifier is used to identify that the voltage fluctuation of the load is currently regulated by using the switch module.

Step E: The voltage regulation circuit generates a second control signal after first specified duration by using the first decision unit based on the second quantity of switches, and outputs the second control signal to the corresponding switch module, to restore a working status of the load to the current working status by using the switch module.

The voltage regulation circuit may convert the second quantity of switches into a form of a digital signal after the first specified duration by using the first decision unit, determine the second quantity of switches that is converted into the form of the digital signal to serve as the second control signal, and output the second control signal to the corresponding switch module 1.

It should be noted that the first specified duration is duration in which a first counting unit performs first counting, and the first specified duration may be preset. For example, the first specified duration may be duration in which the first counting unit counts from 1 to 10.

Further, when voltage fluctuation occurs in the load, a time for the voltage fluctuation is limited. Therefore, to help the voltage regulation circuit to restore the voltage input to the load to a voltage required by the current working status after regulating the voltage fluctuation of the load, the control module may further include a first counting unit.

When the control module includes the first counting unit, the voltage regulation circuit generates the second control signal after the first specified duration by using the first decision unit based on the second quantity of switches, and before outputting the second control signal to the corresponding switch module, may further perform first counting by using the first counting unit based on the first control identifier, and output a first end identifier to the first decision unit after the first counting ends, to indicate, to the first decision unit, that the first specified duration expires. The first control identifier is obtained when the first decision unit simultaneously outputs the first control identifier to the first comparison unit and the first counting unit.

In addition, when outputting the second control identifier to the first comparison unit by using the first decision unit, the voltage regulation circuit further outputs the third control identifier to the first counting unit. Therefore, the voltage regulation circuit may perform second counting by using the first counting unit based on the third control identifier, and output a second end identifier to the first decision unit after the second counting ends, to indicate, to the first decision unit, that the second specified duration expires.

In another possible implementation, the voltage regulation circuit may further output the third control identifier to the first comparison unit, to instruct the first comparison unit to continue to stop comparing the voltage input to the corresponding load with the preset voltage threshold. The third control identifier is used to identify that the working status of the load has been restored to the current working status by using the switch module.

Further, the second control identifier is output to the first comparison unit after the second specified duration by using the first decision unit, to instruct the first comparison unit to compare the voltage input to the corresponding load with the preset voltage threshold again. The second control identifier is used to identify that regulation of the voltage input to the load has been stopped and the voltage input to the load needs to be regulated again by using the switch module.

It should be noted that the second specified duration may be duration in which the counting unit performs second counting, and the second specified duration may be preset. For example, the second specified duration may be duration in which the counting unit counts from 1 to 10.

In a second case, when the load information includes the quantity of executed instructions and the quantity of performed prediction operations, each of the at least one control module includes a second comparison unit, a second decision unit, a second counting unit, and a second storage unit.

An operation that the voltage regulation circuit generates the switch control signal by using each of the at least one control module based on the load information output by the corresponding obtaining module, and outputs the switch control signal to the corresponding switch module may be implemented by performing the following steps F to I.

Step F: The voltage regulation circuit compares the quantity of executed instructions with a first quantity threshold by using the second comparison unit to generate a first comparison value, compares the quantity of performed prediction operations with a second quantity threshold by using the second comparison unit to generate a second comparison value, and outputs the first comparison value and the second comparison value to the second counting unit, where the first quantity threshold and the second quantity threshold are sent by the second storage unit to the second comparison unit in a current counting period.

It should be noted that the first comparison value is used to indicate whether the first quantity threshold is the same as the quantity of executed instructions; when the first quantity threshold is the same as the quantity of executed instructions, the first comparison value is a first value; when the first quantity threshold is different from the quantity of executed instructions, the first comparison value is a second value.

Likewise, the second comparison value is used to indicate whether the second quantity threshold is the same as the quantity of performed prediction operations; when the second quantity threshold is the same as the quantity of performed prediction operations, the second comparison value is a first value; when the second quantity threshold is different from the quantity of performed prediction operations, the first comparison value is a second value.

In addition, the first value and the second value may be preset. For example, the first value may be 1 or 0, and the second comparison value may be 1 or 0. The first value and the second value are two opposite values; when the first value is 1, the second value is 0; when the first value is 0, the second value is 1.

Step G: The voltage regulation circuit combines the first comparison value with the second comparison value by using the second counting unit to obtain a combination value, when the combination value is different from the third quantity threshold, assigns the combination value to the third quantity threshold, determines whether the current counting period ends, when the current counting period ends, determines a fourth control identifier based on the third quantity threshold determined when the current counting period ends, and outputs the fourth control identifier to the second decision unit, where the fourth control identifier is used to identify whether the quantity of executed instructions and the quantity of performed prediction operations are normal.

Specifically, the first comparison value may be combined with the second comparison value by using the second calculation unit to obtain the combination value, and the combination value is compared with the third quantity threshold. When the combination value is the same as the third quantity threshold, the second counting unit may perform counting, and increase a count value by 1. When the combination value is different from the third quantity threshold, the second counting unit assigns the combination value to the third quantity threshold, determines whether the current counting period ends, and when the current counting period ends, determines the fourth control identifier based on the third quantity threshold determined when the current counting period ends. An output end of the second counting unit is connected to an input end of the second decision unit. Therefore, the second counting unit may output the fourth control identifier to the second decision unit, and when the current counting period does not end, repeatedly compare the combination value with the third quantity threshold until the current counting period ends.

The first comparison value may be combined with the second comparison value in a manner in which the first comparison value is followed by the second comparison value, or in a manner in which the second comparison value is followed by the first comparison value.

For example, when the first comparison value is 1 and the second comparison value is 0, the combination value obtained by combining the first comparison value with the second comparison value may be 10, or may be 01.

In addition, an operation that the second comparison unit determines whether the current counting period ends may be as follows: Each time the second counting unit increases a count value by 1, the second comparison unit compares a current count value obtained after 1 is increased with a preset counting period, and when the current count value obtained after 1 is increased is equal to the preset counting period, determines that the current counting period ends, or when the current count value obtained after 1 is increased is not equal to the preset counting period, determines that the current counting period does not end.

It should be noted that the preset counting period may be preset. For example, the preset counting period may be 5, 6, 7, or the like.

For example, the preset counting period is 5. When the combination value is the same as the third quantity threshold, the second counting unit may increase the count value by 1 to obtain a count value 4 obtained after 1 is increased. Because the count value 4 obtained after 1 is increased is not equal to the preset counting period 5, the second comparison unit continues to compare the combination value with the third quantity threshold in the current counting period.

It should be noted that the third quantity threshold may be pre-stored in the second counting unit, or may be input by another external component to the second comparison unit. In addition, the third quantity threshold may be preset. For example, the third quantity threshold may be 11, 10, 01, or the like.

Step H: The voltage regulation circuit generates a third control signal and an update signal by using the second decision unit based on the fourth control identifier, and outputs the third control signal to the corresponding switch module, to regulate voltage fluctuation of the load by using the switch module.

Specifically, the voltage regulation circuit may receive, by using the second decision unit, the fourth control identifier output by the second counting unit, obtain, from a stored correspondence between a control identifier, a control signal, and an update signal based on the fourth control identifier, a control signal and an update signal that are corresponding to the fourth control identifier, and determine the obtained control signal as the third control signal.

Step I: The voltage regulation circuit outputs the update signal to the second storage unit, to update the first quantity threshold and the second quantity threshold that are stored in the second storage unit.

The voltage regulation circuit obtains, based on the update signal, a corresponding first quantity threshold and a corresponding second quantity threshold from a correspondence between an update signal and a first quantity threshold as well as a second quantity threshold that are stored in the second storage unit, and outputs the obtained first quantity threshold and second quantity threshold to the second comparison unit in the current counting period, so that the second comparison unit performs a new round of comparison.

Step 803: The voltage regulation circuit regulates, by using each of at least one switch module based on a switch control signal output by a corresponding control module, a voltage input to the corresponding load.

Each of the at least one switch module includes at least one transistor and at least one drive, and the at least one transistor and the at least one drive are in a one-to-one correspondence. Therefore, the voltage regulation circuit may drive a corresponding transistor by using each of the at least one drive, and control conduction or disconnection of the corresponding transistor based on the switch control signal as driven by the corresponding drive, so as to regulate the voltage input to the corresponding load.

An input end of the drive is connected to an output end of the control module, and an output end of the drive is connected to a gate of the transistor. Therefore, when the corresponding transistor is driven by using the drive, if the switch control signal is a first voltage signal, the transistor is disconnected, or if the switch control signal is a second voltage signal, the transistor may be conducted, to change a resistance value of an equivalent resistor of the at least one transistor, and regulate the voltage input to the load.

It should be noted that the first voltage signal is used to disconnect the transistor, the second voltage signal is used to conduct the transistor, and the first voltage signal and the second voltage signal are two opposite signals.

It should be noted that the transistor in this embodiment of the present invention may be an NMOS (N-channel Metal Oxide Semiconductor, N-channel metal oxide semiconductor) transistor, a PMOS (P-channel Metal Oxide Semiconductor, P-channel metal oxide semiconductor) transistor, or a CMOS (Complementary Metal Oxide Semiconductor, complementary metal oxide semiconductor) transistor. Certainly, the transistor may alternatively be another transistor or an equivalent switch, for example, power gating (power gating).

In this embodiment of the present invention, each of the at least one obtaining module may obtain the load information of the corresponding load, and send the load information to the corresponding control module. The load information may include the voltage input to the corresponding load, the event identifier used to identify whether a voltage drop occurs in the load, and the rated current value and the rated voltage value required by the load in the current working status. The corresponding control module may generate a switch control signal based on the voltage input to the corresponding load, the event identifier, the rated current value, and the rated voltage value that are included in the load information. In addition, the load information may alternatively include the quantity of executed instructions and the quantity of performed prediction operations. Therefore, the control module may alternatively generate a switch control signal based on the quantity of executed instructions and the quantity of performed prediction operations. The load information used when the control module generates the switch control signal is information related to the corresponding load. Therefore, when a voltage fluctuation event such as a voltage drop occurs in the load, the control module may generate the switch control signal in time based on the load information. After the switch control signal is output to a corresponding switch module, the corresponding switch module may regulate, based on the switch control signal, the voltage input to the corresponding load, so as to improve voltage regulation accuracy and reliability. Moreover, when the switch module regulates, by using the switch control signal, the voltage input to the load, the supply voltage provided by a power supply may be reduced, and losses of the integrated circuit may be reduced.

A person of ordinary skill in the art may understand that all or some of the steps of the embodiments may be implemented by hardware or a program instructing related hardware. The program may be stored in a computer-readable storage medium. The storage medium may include a read-only memory, a magnetic disk, or an optical disc.

The foregoing descriptions are merely example embodiments of the present invention, but are not intended to limit the present invention. Any modification, equivalent replacement, and improvement made without departing from the spirit and principle of the present invention shall fall within the protection scope of the present invention.

## Claims

1. A voltage regulation circuit, wherein the voltage regulation circuit comprises at least one switch module, at least one obtaining module, at least one control module, and at least one load, and the at least one switch module, the at least one obtaining module, the at least one control module, and the at least one load are in a one-to-one correspondence;
each of the at least one obtaining module obtains load information of a corresponding load, and sends the load information to a corresponding control module, wherein the load information comprises a voltage input to the corresponding load, an event identifier used to identify whether a voltage drop occurs in the load, and a rated current value and a rated voltage value required by the load in a current working status, or the load information comprises a quantity of executed instructions and a quantity of performed prediction operations;
each of the at least one control module generates a switch control signal based on load information output by a corresponding obtaining module, and outputs the switch control signal to a corresponding switch module; and
each of the at least one switch module regulates, based on a switch control signal output by a corresponding control module, a voltage input to the corresponding load.

2. The voltage regulation circuit according to claim 1, wherein each of the at least one obtaining module comprises a performance monitor; and
the performance monitor obtains the voltage input to the corresponding load, the event identifier used to identify whether a voltage drop occurs in the load, and the rated current value and the rated voltage value required by the load in the current working status, and outputs the voltage input to the corresponding load, the event identifier, the rated current value, and the rated voltage value to the corresponding control module.

3. The voltage regulation circuit according to claim 1 or 2, wherein each of the at least one obtaining module comprises a voltage sensor; and
the voltage sensor obtains the voltage input to the corresponding load and the event identifier used to identify whether a voltage drop occurs in the load, and sends the voltage input to the corresponding load and the event identifier to the control module corresponding to the obtaining module.

4. The voltage regulation circuit according to claim 1, wherein each of the at least one control module comprises a first comparison unit, a first decision unit, and a first storage unit, wherein
when the load information comprises the voltage input to the corresponding load, the event identifier, the rated current value, and the rated voltage value, and the event identifier is an identifier used to indicate that voltage fluctuation occurs in the load, the first comparison unit compares the voltage input to the corresponding load with a preset voltage threshold to generate a first quantity of switches configured to conduct the corresponding switch module, and outputs the first quantity of switches to the first decision unit;
the first storage unit determines, based on the rated current value and the rated voltage value, a second quantity of switches configured to conduct the corresponding switch module in the current working status, and outputs the second quantity of switches to the first decision unit;
the first decision unit generates a first control signal based on the first quantity of switches and the second quantity of switches, and outputs the first control signal to the switch module corresponding to the control module, to regulate the voltage fluctuation of the load by using the switch module;
the first decision unit outputs a first control identifier to the first comparison unit, to instruct the first comparison unit to stop comparing the voltage input to the corresponding load with the preset voltage threshold, wherein the first control identifier is used to identify that the voltage fluctuation of the load is currently regulated by using the switch module; and
the first decision unit generates a second control signal after first specified duration based on the second quantity of switches, and outputs the second control signal to the corresponding switch module, to restore a working status of the load to the current working status by using the switch module.

5. The voltage regulation circuit according to claim 4, wherein each of the at least one control module further comprises a first counting unit, wherein
the first counting unit performs first counting based on the first control identifier, and outputs a first end identifier to the decision unit after the first counting ends, to indicate, to the first decision unit, that the first specified duration expires, wherein the first control identifier is obtained when the first decision unit simultaneously outputs the first control identifier to the first comparison unit and the first counting unit.

6. The voltage regulation circuit according to claim 1, wherein each of the at least one control module comprises a second comparison unit, a second decision unit, a second counting unit, and a second storage unit, wherein
when the load information comprises the quantity of executed instructions and the quantity of performed prediction operations, the second comparison unit compares the quantity of executed instructions with a first quantity threshold to generate a first comparison value, compares the quantity of performed prediction operations with a second quantity threshold to generate a second comparison value, and outputs the first comparison value and the second comparison value to the second counting unit, wherein the first quantity threshold and the second quantity threshold are sent by the second storage unit to the second comparison unit in a current counting period;
the second counting unit combines the first comparison value with the second comparison value to obtain a combination value, when the combination value is different from the third quantity threshold, assigns the combination value to the third quantity threshold, determines whether the current counting period ends, when the current counting period ends, determines a fourth control identifier based on the third quantity threshold determined when the current counting period ends, and outputs the fourth control identifier to the second decision unit, wherein the fourth control identifier is used to identify whether the quantity of executed instructions and the quantity of performed prediction operations are normal; and
the second decision unit generates a third control signal and an update signal based on the fourth control identifier, and outputs the third control signal to the corresponding switch module, to regulate voltage fluctuation of the load by using the switch module.

7. A voltage regulation method, applied to the voltage regulation circuit according to any one of claims 1 to 6, wherein the method comprises:
obtaining load information of a corresponding load by using each of the at least one obtaining module and sending the load information to a corresponding control module when a supply voltage is applied, wherein the load information comprises a voltage input to the corresponding load, an event identifier used to identify whether a voltage drop occurs in the load, and a rated current value and a rated voltage value required by the load in a current working status, or the load information comprises a quantity of executed instructions and a quantity of performed prediction operations;
generating a switch control signal by using each of the at least one control module based on load information output by a corresponding obtaining module, and outputting the switch control signal to a corresponding switch module; and
regulating, by using each of the at least one switch module based on a switch control signal output by a corresponding control module, a voltage input to the corresponding load.

8. The method according to claim 7, wherein each of the at least one obtaining module comprises a performance monitor; and
the obtaining load information of a corresponding load by using each of the at least one obtaining module and sending the load information to a corresponding control module when the supply voltage is applied comprises:
obtaining the voltage input to the corresponding load, the event identifier, the rated voltage value, and the rated current value by using the performance monitor, and outputting the voltage input to the corresponding load, the event identifier, the rated voltage value, and the rated current value to the corresponding control module.

9. The method according to claim 7, wherein each of the at least one obtaining module comprises a voltage sensor; and
the obtaining load information of a corresponding load by using each of the at least one obtaining module and sending the load information to a corresponding control module when the supply voltage is applied comprises:
obtaining, by using the voltage sensor, the voltage input to the corresponding load and the event identifier used to identify whether a voltage drop occurs in the load, and sending the voltage input to the corresponding load and the event identifier to the control module corresponding to the obtaining module.

10. The method according to claim 7, wherein each of the at least one control module comprises a first comparison unit, a first decision unit, and a first storage unit; and
the generating a switch control signal by using each of the at least one control module based on load information output by a corresponding obtaining module, and outputting the switch control signal to a corresponding switch module comprises:
when the load information comprises the voltage input to the corresponding load, the event identifier, the rated current value, and the rated voltage value, and the event identifier is an identifier used to indicate that voltage fluctuation occurs in the load, comparing the voltage input to the corresponding load with a preset voltage threshold by using the first comparison unit to generate a first quantity of switches configured to conduct the corresponding switch module, and outputting the first quantity of switches to the first decision unit;
determining, by using the first storage unit based on the rated current value and the rated voltage value, a second quantity of switches configured to conduct the corresponding switch module in the current working status, and outputting the second quantity of switches to the first decision unit;
generating a first control signal by using the first decision unit based on the first quantity of switches and the second quantity of switches, and outputting the first control signal to the switch module corresponding to the control module, to regulate the voltage fluctuation of the load by using the switch module;
outputting a first control identifier to the first comparison unit by using the first decision unit, to instruct the first comparison unit to stop comparing the voltage input to the corresponding load with the preset voltage threshold, wherein the first control identifier is used to identify that the voltage fluctuation of the load is currently regulated by using the switch module; and
generating a second control signal after first specified duration by using the first decision unit based on the second quantity of switches, and outputting the second control signal to the corresponding switch module, to restore a working status of the load to the current working status by using the switch module.

11. The method according to claim 10, wherein each of the at least one control module further comprises a first counting unit; and
before the generating a second control signal after first specified duration by using the first decision unit based on the second quantity of switches, and outputting the second control signal to the corresponding switch module, the method further comprises:
receiving the first control identifier by using the first counting unit, wherein the first control identifier is obtained when the first decision unit simultaneously outputs the first control identifier to the first comparison unit and the first counting unit; and
performing first counting by using the first counting unit based on the first control identifier, and outputting a first end identifier to the first decision unit after the first counting ends, to indicate that the first specified duration expires.

12. The method according to claim 7, wherein each of the at least one control module comprises a second comparison unit, a second decision unit, a second counting unit, and a second storage unit; and
the generating a switch control signal by using each of the at least one control module based on load information output by a corresponding obtaining module, and outputting the switch control signal to a corresponding switch module comprises:
when the load information comprises the quantity of executed instructions and the quantity of performed prediction operations, comparing the quantity of executed instructions with a first quantity threshold by using the second comparison unit to generate a first comparison value, comparing the quantity of performed prediction operations with a second quantity threshold by using the second comparison unit to generate a second comparison value, and outputting the first comparison value and the second comparison value to the second counting unit, wherein the first quantity threshold and the second quantity threshold are sent by the second storage unit to the second comparison unit in a current counting period;
combining the first comparison value with the second comparison value by using the second counting unit to obtain a combination value, when the combination value is different from the third quantity threshold, assigning the combination value to the third quantity threshold, determining whether the current counting period ends, when the current counting period ends, determining a fourth control identifier based on the third quantity threshold determined when the current counting period ends, and outputting the fourth control identifier to the second decision unit, wherein the fourth control identifier is used to identify whether the quantity of executed instructions and the quantity of performed prediction operations are normal; and
generating a third control signal and an update signal by using the second decision unit based on the fourth control identifier, and outputting the third control signal to the corresponding switch module, to regulate voltage fluctuation of the load by using the switch module.
